(19) **Europäisches Patentamt / European Patent Office / Office européen des brevets**

(11) **EP 2 709 054 A1**

(12) **EUROPEAN PATENT APPLICATION**
published in accordance with Art. 153(4) EPC

(43) Date of publication:
**19.03.2014   Bulletin 2014/12**

(51) Int Cl.:
*G06Q 50/08* *(2012.01)*

(21) Application number: **11849489.7**

(22) Date of filing: **16.12.2011**

(86) International application number:
**PCT/ES2011/000358**

(87) International publication number:
**WO 2012/080534 (21.06.2012 Gazette 2012/25)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **17.12.2010   ES 201001585 P**

(71) Applicant: **Pérez Martin, José Carlos 28232. Las Rozas, Madrid (ES)**

(72) Inventor: **Pérez Martin, José Carlos 28232. Las Rozas, Madrid (ES)**

(54) **METHOD FOR ASSESSING THE RISK ASSOCIATED WITH A BUILDING FIRE**

(57)    The invention relates to a method for assessing the risk associated with a fire in a building, used to calculate the level of risk to which the building occupants would be exposed in the event of an accidental fire, in order to take accurate measurements that can be used to establish an appropriate level of safety. According to the invention, the level of risk is calculated as the ratio of potential danger to global protection level. Potential danger is dependent on the following parameters: number of people exposed, the fire tetrahedron, the characterisics of the occupants, and the characteristics of the architecture. Global protection level is dependent on the following parameters: self-protection plan level, basic structural fire resistance requirement, spread of fire, basic occupant evacuation requirement, basic fire protection installation requirement, and basic fire-fighter intervention requirement.

EP 2 709 054 A1

## Description

### Technical Field

The invention falls within the methods in charge of activating a series of devices for incrementing occupant's security levels in a building in the case a fire event befalls.

### Background of the Invention

Traditionally, security conditions a building must comply with have been regulated by prescriptive bylaw characterized by the detailed itemization of security features to be implemented (escape routes, fire protection facilities (FPF), compartmentalization, etc.) depending on its characteristics (height, surface, uses, etc.). However, the regulatory framework has evolved over time allowing, in the most advanced countries in the field, a performance-based approach besides the traditional prescriptive approach.

The philosophy of this novel approach focuses on establishing the goals of fire safety (performance) and how to achieve them, while granting freedom to the designer for selecting the protective measures that he considers optimal for each specific case. A performance-based project requires providing the authorities with technical documents demonstrating that the security measures adopted on a given construction, are at least as safe as the ones achieved by following the traditional bylaw.

Methods for the assessment of the risk occupants, goods and activities are exposed to in the event of fire in the building are useful for this purpose. There is currently a wide range of fire risk assessment methods: Coefficient K and Alpha factors methods, MESERI, Edwin E. Smith and G. A. Herpol, GRETENER, Gustav Purt, ERIC, FRAME, etc, in addition to numerous patents on the subject, such as: : JP2002117363, GB2376092A, US2006/0111799 A1.

The above methods are applicable, although it can be argued that all of them incur any of the two following shortcomings:

- Prioritizing simplicity and saving time and efforts in their application results in a reduce degree of reliability (method MESERI, Gustav Purt, etc.).
- The concept of "security" is relative and its demand evolves with society itself. Methods of the last century: Gretener 1965, Purt 1971, ERIC 1977, etc., can be hardly adapted to the current Spanish reality.

For these reasons, the present invention aims not only at providing assessment of the feasibility of performance-based projects, but also at addressing other issues of great interest in the field of fire safety in buildings such as:

1. Determining the Level of Danger: by providing a complete catalogue of parameters relating to dangers that may potentially affect a building and to what degree. By quantifying all dangers we can assess the Level of Danger of our building.

2. Determining the Level of Protection: by providing an exhaustive list of protection means described in the state of the art, it is possible to identify the means of protection that can potentially be implemented and their relative incidence and, considering all the security measures in a building, it is possible to determine the Level of Protection achieved. Determining whether the building is sufficiently protected may be achieved by contrasting the Level of Danger with the Level of Protection.

3. Implementing efficient fire protection in real-time.

4. Evaluating existing buildings: the risk and protection levels of existing buildings may be evaluated with the aim of adopting corrective measures in order to comply with current regulations or revealing buildings with imminent or unacceptable risk levels.

### Description of the invention

The invention is a method for assessing the risk in case of fire in a building, applied in order to calculate the level of risk to which occupants are exposed if an accidental fire occurs, resulting in the implementation of specific means to establish an adequate level of safety. If, upon the application of said method, the building is found to be unsafe, appropriate actions will be taken to achieve a safety level. This increase in security may be achieved by reducing risk (limitation of the height under or above the flush line, limitation of activities that may be performed, limitation of the compartmentalization surface, etc.), by the increasing in passive protection means (increasing the fire resistance of structure and/or the elements of compartmentalization, increasing the level of protection, the number, provision and dimensions of escape routes and means) or by increasing active protection (control systems and heat and smoke clearance, fire extinguishers equipped fire hydrants, fire alarm and detection system, emergency lighting, sprinkler installation, emergency elevators, ...), including real-time actions inside the building through the activation of the data-processing system visual and/or acoustic warnings and actuators supporting the blockage of lathes in order to prevent access to the building, locking oxygen valves and acclimatization system and activation of loudspeaker systems.

The method is based on the following premises:

(a) the level of risk evaluated by the claimed method is referred to fire caused by accident and not intentionally.

(b) the claimed method is applied to a sector in fire. However - because a sector in fire isolated from the rest of the building cannot be conceived- other areas of the building are necessarily evaluated with each sector (means of evacuation from the sector to the exit of the building, facades accessible to firefighters, etc.). When a building has several areas in fire, the risk level of the building must be evaluated sector by sector or, at least, by that with the highest risk.

(c) Due to its nature, the prediction of the onset and evolution of the fire is an extremely complex process where a large number of parameters of heterogeneous nature operate. The claimed method attempts to reduce the uncertainty factor by providing a high number of parameters. The coefficients of the formulation and the weights of the main and secondary parameters have been attributed on the basis of measurements, statistics, forecasts and expert judgment. In addition, the parameters have been subjected to thorough and reiterative reviewing using sensitive mathematical assays and over thirty representative case studies.

(d) A minimum training and experience in the field of fire safety is required for the appropriate application of the claimed method -right selection of data input and interpretation of results-.

(e) the value of certain parameters of the method may vary depending on the country's specific regulations.

The method comprises the stages of:

- Harvesting of data related to at least one among: Number of Occupants (NO), Occupant Characteristics (OC), Building features influencing the onset, development and propagation of fire (T), Architectural Characteristics (AC), Building's Self-Protection Plan (SPP), Structural Fire Resistance (SFR), Features for preventing both, inwards and onwards fire propagation (P), Emergency Evacuation Means (EM), Fire Protection System Installation (FPSI) and Firefighter Accessibility (FFA).

Real-time data harvesting may be performed by using devices installed in the building such as: people entry/exit sensors (lathe-like or the equivalent), device for entering a code of a rating system for a variety of activities that may be performed and/or maintenance tasks that can start a fire, sensors for detecting large carts or luggage located in the access to the building, sensors for measuring the density of the different compartments of the building (thermal type, artificial vision or the equivalent), sensors for evaluating: water pressure, water level in the tank, the operating state of the pumping unit, the operating state of the emergency lighting, sprinklers, emergency elevators, firewall doors and gates and emergency power supply.

- Weighting harvested data according to established tables linking each parameter with an impact factor, depending on their greater or lesser incidence;
- Introducing the weighted data in a data-processing system that applies a series of formulas for the calculation of the building's global risk;
- Determining if the retrieved global risk level falls within the limits of security or not, and identification of the degree of deviation.

Thus, when the Potential Fire Risk is greater that the level of Global Protection, the level of Global Risk will be greater than 1, indicating that hazards are not properly prevented with the current means of protection.

GRL≤ 1 admissible risk level.
GRL > 1 inadmissible risk level

The range of values for the Global Risk Level and their qualitative equivalence is represented in the following table:

| Global Risk Level | | |
|---|---|---|
| | Level | Numerical Range |
| ADMISIBLE RISK | Very low risk | <0.5 |
| | Low risk | 0.5-1 |
| INADMISIBLE RISK | High Risk | 1-1.5 |
| | Very High Risk | 1.5-2 |
| | Serious Risk | 2-5 |
| | Very Serious Risk | 5-10 |
| | Catastrophic Risk | >10 |

- implementation of the consequential corrective measures in the building if the Global Risk Level is not on the side of safety by reducing risk (limitation of the height under or above the flush line, limitation of activities that may be performed, limitation of the compartmentalization surface, etc.), by the increasing in passive protection means (increasing the fire resistance of structure and/or the elements of compartmentalization, increasing the level of protection, the number, provision and dimensions of escape routes and means) or by increasing active protection (control systems and heat and smoke clearance, fire extinguishers equipped fire hydrants, fire alarm and detection system, emergency lighting, sprinkler installation, emergency elevators, ...), including real-time actions inside the building through the activation of the data-processing system visual and/or acoustic warnings and actuators supporting the blockage of lathes in order to prevent access to the building, locking oxygen valves and acclimatization system and activation of loudspeaker systems.

The following is a one-by-one description of the parameters that ought to be evaluated to determine the level of risk for each case study and an example of the formulation used by the central data-processing system for obtaining the final result. Some of these parameters may be fixed and others variable.
As mentioned above:

$$GLOBAL\ RISK\ LEVEL\ (GRL) = \frac{POTENTIAL\ RISK\ LEVEL\ (PRL)}{GLOBAL\ PROTECTION\ LEVEL\ (GPL)}$$

Calculation and parameters for assessing the Potential Fire Risk (PRL)

The Level of Potential fire Risk is calculated taking into account four main parameters which provide information about the likelihood of a fire, propagation and virulence that it will reach as well as the foreseeable degree of damage to occupants.
For its calculation, the method applies the following formula:

POTENTIAL RISK LEVEL (PRL) = NPE x (0.4 T + CO 0.3 + 0.3 CA)

Where the four main parameters that define the Potential Risk Level are: Number of People Exposed (NPE), Fire Tetrahedron (T), Characteristics of the Occupants (CO), and Architectural Characteristics (AC).
These parameters depending on others, as described in the following formula:

$$PRL = NPE\ x \left( 0.4\ x \prod_{i=1}^{i=6} ci\ xTMC\ x \prod_{i=1}^{i=5} eai\ xTRC + 0.3\ x \prod_{i=1}^{i=7} coi + 0.3\ x \prod_{i=1}^{i=7} cai \right)$$

Said parameters being:

1. Number of people exposed (NPE).

Refers to the number of people who may be directly affected by a fire. It is a variable parameter. The measurement of this parameter can be taken in real time and, depending on the building, could be obtained by the automatic entry system (type lathe or equivalent) or by installing an entry/exit sensor.

2. Fire Tetrahedron (T).

Four factors must coexist for fire onset and development: combustible, comburent, activation energy and a level of released energy sufficient to allow a chain-reaction. These four factors are known as the "fire tetrahedron" which informs of the probability that a fire will occur and of its magnitude and virulence.

2.1 TC Combustible

$$TC = \prod_{i=1}^{i=6} ci$$

c1 Transferable fire charge: represents the total amount of heat that can be released by the complete combustion of all combustible materials relative to the surface of the fire compartment in assessment. It is a fixed parameter.
c2 Building's fire load coefficient: this parameter accounts for the combustible materials contained in the different elements of the building (structure, ceilings, floors and facades) and its influence on the possible development of the fire. It is a fixed parameter.
c3 Combustibility hazard coefficient: quantifies the flammability of the combustible materials that exist in the fire compartment. It is a fixed parameter.
c4 Smoke hazard coefficient: this parameter accounts for intense smoke released from burning materials. It is a fixed parameter.
c5 corrosion or toxicity hazard coefficient: this parameter accounts for byproducts of the burning of corrosive or toxic gases. It is a fixed parameter.
c6 speed of fire development coefficient, couples the propagation speed with time. This parameter accounts for the margin of time to evacuate, the fire size that intervention teams and firemen will face, etc.

2.2 TCM comburant.

The comburant is a combustible oxidizing substance that enters the combustion process. This parameter accounts for the type of atmosphere and, consequently, of combustion that exists in the compartment on study. The most common comburant is oxygen. It is a variable parameter. It is real-time measurement may be taken from sensors that control the amount of oxygen in the air send data to the system continuously.

2.3 TEA energy of activation.

It refers to the energy required to start the oxidation reaction between a combustible and a carburant.

$$TEA = \prod_{i=1}^{i=5} eai$$

ea1 activation hazard coefficient: corrects the degree of activation hazard inherent to the main activity that is being carried out in the fire compartment. If several activities are carried out in the same compartment, the activity with the highest inherent activation hazard will be considered, provided that such activity occupies at least 10 per cent of the surface of the fire compartment. It is a fixed parameter.
ea2 special risk hazard coefficient: contemplates certain rooms or areas for the development of activities with an inherent special risk due to the high accumulation of fire load, the increased chance of initiating fire, or spreading to the rest of the building (warehouse, boilers, transformers, electric air conditioning, etc.).

ea3 Repair hazard coefficient: when in a building or compartment works of repair, maintenance, rehabilitation, etc. are scheduled, the probability of starting a fire increases significantly due to the tasks involved: welding, radial, flame-cutting, torch, asphalt roofs, etc. It is a variable parameter. In order to quantify this parameter, a device for introducing a rating code for the activity may be installed. This device sends the data to the system.

ea4 State of the electrical installation hazard coefficient: A large number of fires are caused by the poor state of the electrical system and appliances. Therefore, it is important to establish, in fair scope, the incidence that electrical installations have on the potential fire risk, based on the compliance with specific safety regulations. It is a fixed parameter.

ea5 heating and flammable decoration hazard coefficient: this parameter accounts for types of heating or decoration placed in the compartment on study. Sources of heating and candles or equivalents represent the second leading cause of fires in the home.

2.4 CRT chain reaction coefficient.

Combustion is an exothermic reaction. Part of the released energy is dissipated in the environment, causing fire's thermal effects, and part further heats other reagents; when this energy is equal to or higher than necessary, the process continues for as long as reagents are available. It said, then, that there is a chain-reaction. The architectural configuration of the building will influence the chain reaction and, consequently, the magnitude and virulence during fire propagation. The claimed method considers seven architectural types for fire compartments. From the least propagation-aiding to the most, these types are:

- Type I: Compartments that prevent and limit fire expansion horizontally and vertically, whose interior configuration is not diaphanous, comprising multiple inner sectors considered fire compartments.
- Type II: Compartments that prevent and limit fire expansion horizontally and vertically and are further divided by fixed enclosures such as walls, doors, etc., even if they are not fire resistant, that hinder fire expansion and whose built surface (Sb) is $\leq 50m^2$.
- Type III: Compartments that prevent and limit fire expansion horizontally and vertically.
- Type IV: Compartments that prevent and limit fire expansion vertically.
- Type V: Compartments that prevent and limit fire expansion horizontally.
- Type VI: Compartments that do not prevent expansion horizontally nor vertically.
- Type VII: Building of great volume, which favors and accelerates the horizontal and vertical fire expansion.

It is a fixed parameter.

3. Characteristics of the Occupants (CO).

This principal parameter quantifies the vulnerability of the occupants according to their characteristics. A fire will not have the same consequences if instead of valid and healthy people, occupants are people with physical or mental disabilities; or if instead of being awake and alert occupants are asleep; or, if instead of being fully familiar with the building, it is new to them. This principal parameter is calculated as:

$$OC = \prod_{i=1}^{i=7} oci$$

Where,

co1 = coefficient of vulnerability of the occupants due to physical or psychological limitations: statistical data shows that a high percentage of fire casualties are people with physical or mental limitations. They cannot become aware of the fire, or not in time (for being sedated, deaf, intellectually handicapped, etc.), or/and which are unable to follow evacuation by their own means (elderly, young children, hospitalized people, etc.), depending their evacuation on the intervention of first-intervention teams or extinction and rescue personnel. It is a fixed parameter that is set according to the type of activity that takes place in the building.

co2 = coefficient of occupants' familiarity with the building: quantifies the vulnerability/security of the occupants depending on the degree of knowledge they have of the building. This coefficient is closely linked to the frequency with which the occupants use the building, since person familiar with the building and its possibilities: different escape routes, emergency exits alternatives, etc., will deal with the evacuation in a much more successful, quickly and safely way than someone who is unfamiliar with the building. It is a fixed parameter.

co3 = coefficient of sleeping occupants: sleeping occupants are especially vulnerable because they may become aware of the fire late, drastically reducing their options for a safe evacuation. It is a fixed parameter whose value is fixed according to the type of activity in the building.

co4 = risk coefficient due to the use of large trucks, luggage, etc.: this parameter accounts for the risks of crashing during evacuation due to the presence of major obstacles. It is a variable that can be measured by sensors located in the access to the building, detecting the number of large trucks, luggage... entering therein.

co5 = density coefficient: this parameter accounts for the risk of having difficulties during evacuation due to high occupation densities since there is an inversely proportional relationship between the density and speed of evacuation. It is a variable parameter that can be measured with a series of devices located in different areas of the building. These devices can be thermal sensors, artificial vision, and controlled entrance to the premises...

co6 = panic risk coefficient: this parameter contemplates, within the potential risk, the influence of having a panic situation. Depending on the characteristics of the compartment on study (theatres, cinemas, night clubs, shopping centers...). In the majority of buildings it will be a fixed parameter, in multipurpose buildings it's considered a variable parameter and it can be controlled by installing devices for entering a code-system identifying the activities that are being performed.

co7 = orientation coefficient: multiple factors may lead to disorientation: smoke causing invisibility; certain activities require following winding paths that baffle the occupants about their position (case of some malls); blind facades that prevent perceive in which part of the building one is located; stairs with upstream and downstream segments and unclear ground floor signing; etc. It is a fixed parameter and depends on the characteristics of the compartment in study.

4. Architectural Characteristics (AC)

The fourth and last principal parameter, contemplates the relevance that architecture will have on the development and evolution of a fire. This main parameter is calculated as:

$$AC = \prod_{i=1}^{i=7} aci$$

Where,

ac1 = Compartment surface area coefficient: The dimensions of the compartment will determine the extent and power of a fire, conditioning as well the operations of the first intervention team and firefighters, etc. It is a fixed parameter.

ac2 = coefficient for height over flush-line: rates the complexity of occupants evacuation, in the event of fire, - depending on the height of the plant above ground - as well as of the difficulties of receiving assistance from the rescue team. The criteria used for weights assignment assumes that ground floor has free accessibility to the rescue team while from the 9th floor on, there is no possibility for facade evacuation in most cities. If the compartment in study includes several floors, the highest will be considered. It is a fixed parameter.

ac3 = Coefficient of number of underground floors: underground fires are highly dangerous because the upstream confluence evacuation of people with the smoke (toxic gasses, opacity and thermal load). The number of underground floors is a fixed parameter.

ac4 = Ceiling height coefficient: Low ceilings will favor the fire to spread more rapidly than high ceilings and also will affect before the airways of the occupants. The ceiling height of the enclosure is a very important factor as the critical moment of the fire comes just as the flames reach the ceiling, increasing significantly the radiant energy generated. The ceiling height is a fixed parameter.

ac5 = Coefficient of accessibility in facade: it informs us about the ease that the occupants can access different building exits and the accessibility to the interior by 105 firefighters. The access to the different outputs depends on the number of these and their geometrical distribution, with the aim that in case of fire the exits will not be locked by the smoke. To this end, the building shape should be likened to a rectangle according to the following configurations:

Type Q: Fully accessible: around its perimeter facade.

Type P: Three sides of the perimeter facade.

Type O: Two opposing sides these being accessible. In this type can be assimilated two exits on a single facade located at the ends and at great distance.

Type Ñ: Two adjacent sides these being accessible. In this type must be treated two outlets located on one facade, distant but not located in their ends.

Type N: Only one side of the perimeter is facade.

Type M: Only one side of the perimeter is facade being this the one whose length is less than 1/4 of the perimeter of the building.

Note: The term facade is understood as the side of the perimeter that has at least one exit of the building.

Note: The fumes prevent the accessibility of the firefighters to the underground sectors forcing them to go with self-contained breathing equipment, with no or low visibility and high thermal stress. Furthermore, underground evacuation of the occupants joins the upstream fumes. For this reason all underground industry with more than two exits should be classified as Type N.

It is a fixed parameter.

ac6 = Coefficient depending on the thermal properties of the shell sector. It reports the operation of enclosure to dissipate outside the heat generate therein. The higher the thermal conductivity of the materials forming the enclosure and the lower its thermal dissipation the more dissipation will be achieve and vice versa. The parameter measured is the absorptivity of the materials. It is a fixed parameter.

ac7 = Coefficient of the wall and roof ventilation: it reports of the capacity of the housing (wall and roof) to outside the enclosure and dissipate the heat generate therein, also the capacity of the enclosure to evacuate fumes through holes in facades and cover windows, drainpipes, skylights, etc. It is a fixed parameter.

Calculating v Parameters defining Global Protection Level

The Global Protection Level (GPL) is calculated according to six main parameters. For your calculation uses the following formula:

$$GPL = SPP \times SFR \times (P + 0.4\ 0.24 + 0.24\ EM\ 0.12\ FPSI + FFA)$$

Being the six parameters that define Global Protection Level that is set out below.

1. Level of Self-Protection Plan (SPP).

The self-protection is the systematic set of forecasts and applicable actions and efforts to prevent and avoid emergencies arising from the risks involved. If such risks become apparent, leading to emergency situations, establishing measures to reduce its impact immediately and effectively. It is a fixed parameter that depends on the type of self-protection plan that owns the building.

2. Structural Fire Resistance (SFR)

This parameter indicates whether the main supporting structure will maintain its fire resistance long enough for them to meet the other parameters for global protection. It is a fixed parameter.

3. Fire Propagation (P)

Propagation is divided into Inner Propagation (IP) and Outer Propagation (OP). The outside, involves both the spread of fire in the building to other buildings considered.

The main parameter is calculated as:

$$P = IP \ X \ OP$$

$$P = \prod_{i=1}^{i=4} ip1i \ x \ ip2 \ x \prod_{i=1}^{i=3} ip3i \ x \prod_{i=1}^{i=2} iop$$

Being:

- IP1 Compartmentalization in Sector in fire

   ip1.1 = Coefficient for the degree of fire resistance of the walls and ceilings fire sector: it depends on the confinement time of the fire. It is a fixed parameter.

   ip1.2 = Coefficient for the degree of fire resistance of doors: This parameter reports the incidence in the partitioning. It is t a fixed parameter.

   ip1.3 = Coefficient for the degree of compartmentalization of lifts spanning fire sectors: proper compartmentalization prevents fire spread vertically through elevator shafts. It is a fixed parameter.

   ip 1.4 = Coefficient under warranty closing fire doors in case of fire: items have approved (closers, locks controlled double doors and electromagnetic retainer) to close fire doors in case of fire and allow the compartmentalization continuity prevents horizontal spread of the fire. It is a fixed parameter.

- IP2 Facilities Pass through fire compartmentalization elements: elements partitioning seal elements at points which are traversed by the passage of facilities (cables, conduits, pipes) prevents horizontal or vertical spread of fire. It is taken.

- IP3 Hazard Coefficient by the Degree of Reaction to Fire

   ip = 3.1 Type of reaction to fire performance of construction elements: This parameter reports the incidence in the onset and spread of the fire and the smoke and drops inflamed cladding materials of construction elements (walls, ceilings, floors, pipes, etc..). It is a fixed parameter.

   ip = 3.2 Type of reaction to fire performance of textile items covered: This parameter reports on the impact it has, in the initiation and spread of fire, cover textile items, tents and the like. It is a fixed parameter.

   ip = 3.3 Type of reaction to fire of the decorative elements and furniture: This parameter reports on the impact it has, in the initiation and spread of fire, decorative items and furniture, armchairs, curtains, curtains, drapes, etc.. It is a fixed parameter.

   OP = Basic requirement outdoor propagation

Influence in the calculation the following parameters:

op1 = Coefficient of limiting the spread of facade and covered by fire resistant elements: this parameter indicates the impact that has, to prevent the spread of fire, have adequate partitioning elements in facades and roofs. It is a fixed parameter.

op2 = Coefficient by limiting the reaction to fire of the facade and cover: Indicates the impact it has, to prevent the onset and spread of the fire, the smoke and burning droplets, limiting the degree of reaction to fire of materials coverings of facades and roofs. It is a fixed parameter.

4. Basic Requirement Occupants Evacuation (OE).

It assesses whether the building has adequate means of escape for the occupants to leave or reach safety within it in safety.
It is calculated as shown:

$$OE = OE1 \; x \; OE2 \; x \; OE3 \; x \prod_{i=1}^{i=5} oe4i \; x \prod_{i=1}^{i=4} oe5i \; x \; OE6 \; x \; OE7$$

Where:

OE1 = Number of exits: This parameter reports on the importance of having a minimum number of exits to allow the alternative evacuation in case of lock of any of them, in order to achieve quick and safe evacuation of occupants. It is a fixed parameter.

OE2 = Evacuation Route length: This parameter reports on the impact it has, for rapid and safe evacuation of occupants, provide a means of escape within a limited distance. This limitation in the distance, indicate by way of guidance the time exposure of people to fire. It is a fixed parameter.

OE3 = Dimension of escape routes: This parameter indicates the impact that has the fact of having available means of escape for a quick and safe evacuation of the occupants, according to the maximum capacity expected. It is a fixed parameter.

OE4 = Protection of escape routes

oe4.1 = Vertical horizontal or mixed evacuation: This parameter indicates the impact that has the fact of having available horizontal and quicker evacuation means, vertical or conglomerate. It is a fixed parameter.

oe4.2 = Horizontal Exits: They inform us about the safety that means having horizontal evacuation means for a safe evacuation of occupants (the safest). It is a fixed parameter.

oe4.3 = Vertical Exits: They inform us about the importance of having horizontal evacuation means and its relevance for safe evacuation of occupants and how different types depending on the level of protection. It is a fixed parameter.

oe4.4 = Continuity on the stairs: This parameter indicates the impact that has available for safe evacuation of occupants, available from the culmination of the stairs, downstairs to the exit of the building, continuity in environmental protection of the evacuation mean, It is a fixed parameter.

oe4.5 = Ventilation of the protected means of escape: This parameter represents the relevance that has for safe evacuation of the occupants, provide ventilation to prevent or mitigate the invasion of fire smoke in the means of escape. It is a fixed data.

OE5 Doors located in the escape routes

oe5.1 = In the open door sense: This parameter represents the relevance that has for safe evacuation of the occupants, having doors that by the sense of opening favoring the evacuation and prevent the blocking of the same by the pressure of the occupants. It is a fixed parameter.

oe5.2 = Device of doors opening: This parameter represents the importance that has for a safe evacuation of the occupants, whose mechanisms have opening doors that ensure their use in an emergency. It is a fixed parameter.

oe5.3 = Type of door: This parameter represents the impact that has, for safe evacuation of occupants, having doors that are reliable in its opening stroke and not blocked or clogged (e.g.: sliding). It is a fixed parameter.

eo5.4 = Automatic doors type: This parameter represents the impact that has, for safe evacuation of occupants automatic doors have either non-emergency use, or are designed to be reliable. It is a fixed parameter.

OE6 = Marking of escape routes: This parameter represents the importance that has for a safe evacuation of the occupants having markers that allow the evacuation from any source of evacuation to secure outdoor space.

OE7 = Control of the fire smoke SHCS (Smoke and Heat Control System): This parameter represents the importance of safety to have a Temperature Control System and Smoke Evacuation. A SHCS is essentially a facility that has a set of openings o mechanical extraction (fans) for the evacuation of smokes and hot gasses from the combustion of a fire and opening of the clean air. It is a fixed parameter.

OE8 = Evacuation of handicapped people in case of fire: It indicates whether floors have way to fire sector by a floor exit or suitable refuge area for the number of places regulations and if they have any accessible route from all sources including regulatory evacuation and if available, to ensure the evacuation to outer and safe space located in an accessible area to an exit of the building. It is a fixed parameter.

5. Basic Requirement of Fire Protection System Installations (FPSI)

The main parameter directs us if it is true that the building has adequate equipment and facilities to enable the detection, control and extinguishment of the fire as well as the transmission of the alarm to the occupants.
It is calculated as:

$$FPSI = \prod_{i=1}^{i=6} fpsi1i \; x \prod_{i=1}^{i=4} fpsi2i \; x \prod_{i=1}^{i=2} x \; fpsi3i \; x \prod_{i=1}^{i=3} fpsi4i$$

Being:

FPSI1 = Detection system and fire alarm: System that detects a fire in the shortest time possible and produces the warning signs and suitable location for them to be taken appropriate action.

fpsi1.1 = Availability of fire detection and alarm: This parameter penalizes the lack of fire detection and alarm. It is a fixed parameter.

fpsi1.2 = Type of detection: This parameter quantifies the type of fire detection in terms of their effectiveness. Detection systems can be manual or automatic. Detection Manual systems consist on alarm buttons that are activated by people when they detect a fire, communicating to the central detector. Automatic detectors are elements that detect fire through some phenomena accompanying the fire gases and smoke, temperature, UV radiation, visible or infrared, etc. It is a fixed parameter.

fpsi1.3 = Identifier detector: This parameter quantifies the ability of the detection system to accurately identify the area where the fire is occurring. This will impact on decision making in priority areas in the evacuation and allow for intervention in the fire without delay by first responders or firefighters. It is a fixed parameter.

fpsi1.4 = Fire Alarm System: This parameter quantifies the system's ability to effectively move the fire alarm and evacuation instructions to the occupants. It is a fixed parameter.

fpsi1.5 = monitored alarm panel: This parameter represents the monitoring that is done the central detector so that the information provided by it can be quickly and efficiently handled by the responsible Self-Protection Plan. It is a fixed parameter.

fpsi1.6 = Center connected to firefighters: This parameter quantifies the possible connection of the central detector to the fire department so the information provided by it can be quickly and efficiently managed, in addition to the charge of self-protection plan by Extinguishing and Rescue Services. It is a fixed parameter.

FPSI2 Manual extinguishing installations

fpsi2.1 = Manual extinguishing installations: This parameter penalizes the absence of fire extinguishers facilities, which allow controlling and extinguishing the fire when it is in its incipient stage. It is a fixed parameter

fpsi2.2 = Dry Column: The purpose of this facility is to be used for water conveyance that vehicles of the fire pumps can supply water through it, to the different floors of the building. It is a fixed parameter.

fpsi2.3 = Hydrants: This parameter quantifies the existence of a hydrant installation which allows water supply to the building by the Fire Department. It is a fixed parameter.

fpsi2.4 = Inside Hose Reel: This parameter quantifies the existence of a fire hydrant installation equipped that allows manual control and fire extinguishing. Knowing if you are operating or not a variable data can be measured by a device that assesses the water pressure, filling the cistern and the proper functioning of the pump.

FPSI3 = Automatic extinguishing installations

fpsi3.1 = Area of protection: This parameter represents the impact it has to have automatic extinguishing system coverage to the maximum possible area of industry for rapid and effective control and extinguishment. Sprinklers or automatic fixtures are the most widespread. The installation, connected to one or more power sources, comprising a control valve and a generally branched pipes, pressure water, to which are attached some valves, or spray heads, called "sprinkler" which open automatically when the temperature reached is high. The water supply to the corresponding flow and pressure is done by pumping group that supplies a cistern. Its availability is a variable data can be measured by a device that assesses the water pressure, filling the tank and the correct functioning of the pump.

fpsi3.2 Design Objective: This parameter quantifies the effectiveness of automatic extinguishing system, depending on their design goal (designed to extinguish, suppress or control the fire). It is a fixed parameter.

FPSI4 Complementary systems in fire safety

fpsi4.1= = Signaling facilities PSI: This parameter quantifies the contribution to the protection that involves the provision of signage to identify the location, both under normal environmental conditions and with reduced visibility of the fire protection facilities. It is a fixed parameter.

fpsi4.2 = Emergency Elevators: This parameter quantifies the contribution to the protection which involves the provision of emergency lifts in the building that allows the rapid transfer of firefighters and their equipment and evacuation by teams rescue automotive disabled. The number of emergency lifts are operational at all times is a data variable.

fpsi4.3 = Emergency lighting: The emergency lighting system wants to ensure, in case of power failure to the normal lighting, visibility to the users so that they can leave the building, to avoid panic situations, allow vision of the signals indicative of the outputs and the status of the equipment and existing protection means or illuminate other danger points. That is operational or not a variable data can be measured by a sensor that detects the availability of emergency power supply.

6. Firefighter Accessibility (FFA)

It reports the facility in the intervention of rescue teams and fire suppression.
It is calculated as:

$$FFA = \prod_{i=1}^{i=3} ffai$$

Where:

ffa1 = Accessibility and fire environment: This parameter quantifies the contribution to the protection which means the accessibility of the building facade fire to vehicles. It is a fixed parameter.

ffa2 = Distance to Fire Station: This parameter quantifies the contribution to the protection it means to have a nearby firehouse for a speedy intervention of rescue teams and fire extinguishing. At the fire station, a device to communicate at all times to central data system operational availability of their endowments. It is a variable parameter.

ffa3 = Private Fire: This parameter quantifies the contribution to the protection that means having permanent fire department in the building. It is a fixed parameter.

This system, unlike the known methods belonging to the state of the technique offers a number of differences are that the method gains in reliability and robustness, such as:

1. The number of parameters involved is going to provide completeness and high confidence in the results. It has been developed a large number of parameters involved in the formulation. A level indication, for fire risk assessment for individuals, the claimed method uses many more input parameters (73), -28 to determine the danger level and 45 for the level of protection-that the evaluation methods referenced and extended: Gretener method (24) and FRAME method (40) using parameters 9 and 18 respectively to determine the level of danger, and 15 and 22 for the level of protection.

2. In the development of the method was intended to balance the number of input sources and ease of implementation, reduced transparency and investment of time in use.

3. To determine the level of hazard potential new parameters have been developed or an innovative approach to what is known in the prior art, among which highlight:

- Comburant coefficient: The method includes the novel trend inert protection air, also known as hypoxic air (with a reduced concentration of oxygen). Inert air you can breathe, but prevent ignition and fire in common materials. Also collects Otherwise, the incidence of oxygen-rich atmospheres (if hospital rooms) which increases the likelihood and effects of fire.

- Coefficient of facade and roof ventilation: This ratio, will inform the venue capacity to evacuate the smoke through holes in the facade or covers (windows, drainpipes, skylights, skylights, etc.).

- Coefficient of ceiling height: Factors that most influence the behavior of the speed of development, spread of fire and impact on people is the height of the ceiling of the enclosure. When the ceilings are low, the flame reaches the mattress faster smoke (very rich fuel gases such as carbon dioxide derived from incomplete combustion). Upon reaching the mattress flames ignite the flue gases accumulate there propagating along it. Thus, the fire supply the radiation energy necessary for fuel elements contained in the enclosure remote areas in less time to reach the activation energy necessary to ignite, thus contributing to the rapid evolution of the fire and the generation of the dreaded Flashover. In that way, the low ceilings will encourage spread much faster than the high ceilings. Add to this, that the low ceilings long before going to affect the airways of the occupants.

- Coefficient of speed of fire development: The speed of fire development is a parameter that relates the fire spread with time. This provides information on the range of time to evacuate, fire size to be encountered with firefighter crews, etc.

- Hazard Ratio for Repair: The statistic tells us that many fires occur when buildings are being renovated: Palacio de Congresos in Madrid, Torre Urquinaona in Barcelona, Palacio de los Deportes in Madrid, Windsor Building, etc.. Therefore, it was considered necessary that the method collect increased fire hazard activation depending on the scope and extent of the repair work.

- Hazard ratio for heating and decoration flammable items: Heat sources represent a high percentage of fire origin with very burdensome consequences. Another major cause of fires is combustible decorative elements (candles, lanterns, torches, etc.).

- Chain reaction coefficient: the architectural configuration of the building will affect the fire chain reaction (fourth element of the fire tetrahedron) and consequently the magnitude and virulence in the spread of fire. A novel way have been developed seven possible architectural topologies of the sectors to effect chain reaction-less favoring the spread of fire over-representing them in a schematic graph illustrating each. Each type has been quantified in terms of its impact on the chain reaction.

- Coefficient of familiarity of occupants with the building: The greater degree of knowledge is an occupant of a building the greater chance you have of successfully evacuate in case of fire. One of the main problems encountered in a fire, the fire is quickly tends to block, at least one of the outputs. In this situation, a person familiar with the building and the various possibilities it offers (different escape routes and emergency exits), will address the evacuation of much more accurate, faster and safer than anyone ignorant of the building. Therefore, this ratio aims to quantify the vulnerability / safety of the occupant according to the degree of their knowledge of the building.

- Coefficient of Vulnerability of occupants by physical or psychic limitations:

  A scenario as critical as originating in a fire (high temperature, toxic and irritating smoke, darkening the environment, people panic, disorientation, etc.) requires that occupants deploy all its physical / psychic to escape. The statistics tell us that a high percentage of deaths in fires are people with disabilities.

4. To determine the Level of Protection has developed new parameters or with an innovative approach to what is known in the state of art, among which it is worth mentioning:

- Evacuation of people with disabilities in the event of fire: the objective is that from a certain building features (usually height) in which people with disabilities (visual, auditory, on wheelchair, etc.) will have serious difficulties to evacuate, we evaluate the security measures in effect to facilitate evacuation safe enough.

- Coefficients for doors due to high incidence of both safety doors as a firewall to prevent spread as well as element a fire evacuation means,

- Number of exits: Parameter of great importance, for informing on the ease with which occupants to evacuate by different exits, allowing alternative escape routes in case of blocking any output by fumes in or to the flames. The method claimed six typologies developed innovative graphic summarizing the number of cases that can occur depending on the number of outputs and their geometric arrangement.

- Protection of escape routes: This parameter indicates the impact that is having available fast and safe means of escape for safe evacuation of occupants. In this sense, the method of the invention distinguishes between horizontal evacuation means (faster) of the vertical or mixed. It also covers the safety aspect of the flush medium-exposed or not to the effect of smoke and flames and it differences between those who are endowed with protected escape routes in its different magnitude (delimited by fire resistant walls, ventilated lobbies, etc.) of those without such protections.

- Kind of reaction to fire performance of covered textile items: This parameter reports on the impact it has cover textile items, tents and the like used in the building in the initiation and spread of fire.

- Automatic extinguishing installations: as credited to statistics, these facilities, designed to quickly and efficiently extinguish the fire, represent one of the most effective safety measures that can be implemented. While this parameter has traditionally been collected in many methods for assessing the state of the art, the method of the invention has been given a new treatment, so that their impact on safety has been considered in terms of three factors: the nature of the coverage area provided, the magnitude of the coverage area provided on the sector to study and the design goal of the system: extinction, suppression or extinguishment.

- Smoke-Fire Control: Most fire deaths are related to inhalation of toxic fumes. The importance of ventilation as a measure of protection against fumes is collected in this method with two parameters.

The first relates to the ventilation of protected escape routes (stairways, hallways, etc.). and the second evaluates the importance, that have a system to ensure temperature control and smoke exhaust courts, crowded public spaces, shopping centers as well as for its high rate of release smoke in the car for safe evacuation of occupants,

- Self-Protection Plan: In addition to the active and passive measures available to the building the security of a building is supported by a central pillar: Self-Protection Plan. This determines the organizational and functional framework provided by an activity in order to prevent and control risks to people and property and to adequately respond to possible emergencies. A building properly equipped with safety measures but lacking a plan of action in case emergency worker training, etc. can be quite unsafe. For the safety relevance is have an effective Self-Protection Plan and a proper introduction, the claimed method gives the main parameter value. For the purpose of Self-Protection Plan, the method classifies buildings into three types according to the decreasing degree of dangerousness.

For all of these reasons, the claimed method is a great improvement on what exists in the prior art with reliability and robustness solving the technical problem to municipalities, owners, promoters and rehabilitative and security companies assessing the level of risk in case of fire in buildings, not only new buildings but also in existing buildings, activating devices that raise occupant's security if the risk level is high.

**Preferred embodiment of the invention**

The preferred embodiment of the method of activating security devices in a building discussed below, is conceived taking into account the safety level established by the Royal Decree 314/2006, of March 17th, thereby approving the Technical Building Code (BOE the 28th March 2006) and its subsequent amendments, up to the current Royal Decree 173/2010, of March 11th 2010, *thereby amending the Technical Building Code, approved by Royal Decree 314/2006, of March 17th, in terms* of *accessibility and non-discrimination of people with disabilities).* In case of implementing the method in other countries or future amendments to the national legislation, the value of certain parameters would be recalculated on the basis of its regulations or the scope of the amendments.
The steps of the method for this preferred embodiment are the following:

- Real-time data harvesting by means of sensors or devices installed in said building, said devices relating to at least one among: Number of Occupants (NO), Characteristics of the Occupants (CO), Building features influencing the onset, development and propagation of fire (T), Architectural Characteristics (AC), Building's Self-Protection Plan (SPP), Structural Fire Resistance (SFR), Features for preventing both, inwards and onwards fire propagation (P), Emergency Evacuation Means (EM), Fire Protection System Installation (FPSI) and Firefighter Accessibility (FFA);

Sensors or devices installed in the building in study may be people entry/exit sensors (lathe-like or the equivalent), device for entering a code of a rating system for a variety of activities that may be performed, sensors for detecting large carts, luggage... located in the access to the building, sensors for measuring the occupation density in the different compartments of the building (thermal type, artificial vision or the equivalent), sensors for evaluating water pressure, water level in the tank, the operating state of the pumping unit, the operating state of the emergency lighting, sprinklers, emergency elevators, firewall doors and gates and emergency power supply.

- Real-time dispatch of harvested data to a data-processing system supplied with additional, non real-time, building data in order to determine the building's Global Fire Risk in case of a potential fire event;

- Activation of security devices in the building if the building's Global Fire Risk is beyond the security level, wherein said activation modifies at least one among: Number of Occupants (NO), Characteristics of the Occupant (CO), Building features influencing the onset, development and propagation of fire (T), Architectural Characteristics (AC), Building's Self-Protection Plan (SPP), Structural Fire Resistance (SFR), Features for preventing both, inwards and onwards fire propagation (P), Emergency Evacuation Means (EM), Fire Protection System Installation (FPSI) and Firefighter Accessibility (FFA).

The type of activated devices are data-processing system visual and/or acoustic warnings and actuators supporting the blockage of lathes in order to prevent access to the building, locking oxygen valves and acclimatization system and emission of messages by loudspeakers etc.
The value of the parameters for this preferred embodiment is displayed below:
• Number of people exposed (NPE)

| Number of people exposed | Coefficient depending on the number of people exposed |
|---|---|
| Occupation> 10000 people | 1.6 |
| Occupation 5000-10000 individuals | 1.5 |
| Occupation 1000-5000 people | 1.4 |

(continued)

| Number of people exposed | Coefficient depending on the number of people exposed |
|---|---|
| Occupation 500-1000 people | 1.3 |
| Occupation 225-500 people | 1.2 |
| Occupation 65-225 people | 1 |
| Occupation 0-65 people | 0.8 |
| Zero occupancy sector | 0.15 |

• c1 Transferable fire charge:

| Fire compartment use | Transferable fire charge |
|---|---|
| Business | 1.4 |
| Residential Housing | 1.4 |
| Hospital | 1.1 |
| Public Residential | 1.1 |
| Administrative | 1.3 |
| Teacher | 1.2 |
| Public Places | 1.1 |
| Parking Garage | 1.1 |

• c2 Coefficient of danger by transferable fire load:

| Characteristics | Transferable Fire Load |
|---|---|
| Fuel Supporting structure (concrete, steel, and brick) and facade and / or roof combustibles (wood, synthetic material, etc.) | 1.3 |
| Fuel Supporting structure (concrete, steel, brick) and fireproof facade and roofs. | 1,2 |
| Supporting structure noncombustible (concrete, steel, and brick) and front and / or roofs fuels (wood, plastics, etc.) | 1.1 |
| Supporting structure noncombustible (concrete, steel, brick) and front and / or multi-combustible roofs being the fireproof exterior | 1.05 |
| Supporting structure noncombustible (concrete, steel, brick) and front and fireproof roofs | 1 |

• c3: Combustibility hazard coefficient

| Fire compartment use | Combustibility hazard coefficient |
|---|---|
| Business (1) | 1.2 |
| Residential Housing | 1.2 |
| Hospital | 1.2 |
| Public Residential | 1.2 |
| Administrative | 1.2 |
| Teacher | 1 |
| Public Places | 1.2 |
| Parking Garage | 1.2 |

• c4: Smoke hazard coefficient

| Fire compartment use | Smoke hazard coefficient |
|---|---|
| Business (1) | 1.2 |
| Residential Housing | 1 |
| Hospital | 1 |
| Public Residential | 1 |
| Administrative | 1 |
| Teacher | 1 |
| Public Places | 1 |
| Parking Garage | 1.2 |

• c5: Corrosion or toxicity hazard coefficient:

| Fire compartment use | Corrosion or toxicity hazard coefficient |
|---|---|
| Business (1) | 1.2 |
| Residential Housing | 1 |
| Hospital | 1 |
| Public Residential | 1 |
| Administrative | 1 |
| Teacher | 1 |
| Public Places | 1 |
| Parking Garage | 1.2 |

• c6: Speed of fire development coefficient:

| Fire compartment use | Speed of fire development coefficient |
|---|---|
| Business (1) | 1.4 |
| Residential Housing | 1.2 |
| Hospital | 1.2 |
| Public Residential | 1.2 |
| Administrative | 1.2 |
| Teacher | 1.2 |
| Public Places | 1.4 |
| Parking Garage | 1 |

TCM comburent

| Comburent | Contribution to risk |
|---|---|
| Oxygen-rich atmosphere (hospitalization, etc.) | 1.3 |
| Normal atmosphere | 1 |
| Ventilated inert air (preventively) 15%-16% O2 | 0.5 |

(continued)

| Comburent | Contribution to risk |
|---|---|
| Ventilated inert air (extinction mode) 10%-12% O2 | 0.3 |

TEA energy of activation
• ea1: Activation hazard coefficient

| Fire compartment use | Activation hazard coefficient |
|---|---|
| Business (1) | 1 |
| Residential Housing | 1 |
| Hospital | 1 |
| Public Residential | 1 |
| Administrative | 0.85 |
| Teacher | 0.85 |
| Public Places | 1 |
| Parking Garage | 1 |

• ea2: Special risk hazard coefficient

| Special Risks in the sector | Hazard coefficient of fire Compartment |
|---|---|
| There is high special risk without protection according to the TBC | 7 |
| There is medium special risk without protection according to the TBC | 5 |
| There is low special risk without protection according to the TBC | 4 |
| There is high special risk with protection according to the TBC | 1.3 |
| There is medium special risk with protection according to the TBC | 1.2 |
| There is low special risk with protection according to the TBC | 1.1 |
| Without special risks | 0.85 |

• ea3: Repair hazard coefficient:

| Scope and activities of the work in the sector | Maintenance hazard coefficient |
|---|---|
| Comprehensive intervention activities can easily cause a fire (e.g. welding, flame-cutting, torch, asphalt roofs, fabric treatment, radial, etc.) | 1.35 |
| Comprehensive intervention activities that may even cause a fire. | 1.2 |
| Punctual activities in time and space that can easily cause a fire (e.g. welding, flame-cutting, torch, asphalt roofs, fabric treatment, radial, etc.) | 1.1 |
| Punctual intervention activities in time and space that may even cause a fire. | 1.05 |
| Without works | 1 |

• ea4: State of the electrical installation hazard coefficient:

| Characteristics | State of the electrical installation hazard coefficient: |
|---|---|
| It does not meets the Low Voltage Electrotechnical Regulations or other regulations in the field | 1,45 |

(continued)

| Characteristics | State of the electrical installation hazard coefficient: |
|---|---|
| It meets the Low Voltage Electrotechnical Regulations or other regulations in the field | 1 |

• ea5: Heating and flammable decoration hazard coefficient:

| Types of heating or decoration | Heating and flammable decoration hazard coefficient * |
|---|---|
| Utilization of combustible decorations (candles, lanterns, torches, etc.) in the presence of hanging textile items (curtains, draperies, etc.) | 1.35 |
| Room heaters flame (gas, coal, kerosene, etc.) or chimneys | 1.25 |
| Utilization of combustible decorations (candles, lanterns, torches, etc.) | 1.15 |
| Room without heaters flame (gas, coal, kerosene, etc.) or chimneys | 1.05 |
| Without heating and flammable decoration elements* | 1 |

• CRT chain reaction coefficient

| Classification of the Sector | Chain Reaction |
|---|---|
| Type VII | 1.45 |
| Type VI | 1.30 |
| Type V | 1.20 |
| Type IV | 1.10 |
| Type III | 1 |
| Type II | 0.85 |
| Type I | 0.5 |

Characteristics of the Occupants (CO)

• co1 coefficient of vulnerability for occupants physically or psychically handicapped

| Sector types occupants | Coefficient of vulnerability of the occupants due to physical or psychological limitations |
|---|---|
| Nursery (0-3 years), hospitalization, Alzheimer's patients, etc. | 3 |
| Nursing homes, geriatric, day centers, children education centers (3-6 years), special education centers, etc. | 2.4 |
| Primary (6-12 years), physically or psychologically handicapped to a moderate degree, etc. | 1.6 |
| Hotels, Houses, etc. | 1 |
| People mostly valid for self-evacuation or surrounded by people who can help them in an emergency (university centers, administrative use, etc.) | 0.9 |

• co2 = Coefficient of occupants' familiarity with the building:

| Type of building | Coefficient of occupants' familiarity with the building |
|---|---|
| Majority of occupants with little or no familiarity with the building (e.g. hotels, hospitals, theaters, etc.). | 1.35 |
| Presence in the building of occupants without familiarity (malls, public administrative use, etc.) | 1.2 |
| Most of the occupants are familiar with the building (private Administrative Use, etc.) | 1 |
| Occupants very familiar with the building (Use Residential Housing, housing park, etc.) | 0.8 |

$co3$ = Coefficient for sleeping occupants:

| Type of use | Coefficient for sleeping occupants |
|---|---|
| Possible presence of sleeping occupants (Use Residence Housing, Residential Public And Hospital Use) | 1,45 |
| Lack of sleeping occupants | 1 |

• $co4$ = Risk coefficient due to the use of large trucks, luggage, etc.:

| Type of building | Risk coefficient due to the use of large trucks, luggage, etc. |
|---|---|
| With the presence of shopping carts (e.g. hypermarkets, transport terminals with trunk cars, etc.) | 1,45 |
| Users with suitcases, trolleys, etc. (e.g. transport terminals medium or long distance without trunk car service, etc.) | 1,2 |
| It not is expected the use of cars, luggage, trunk or similar | 1 |

• $co5$ = coefficient of occupation density

| Occupation Densities | Density Coefficient |
|---|---|
| Great occupation densities < 0.5 m2/person (standing spectator areas, public areas in nightclubs, etc.) | 2.5 |
| Very high occupation density: 0.5-1 m2/person (multiple use saloons, public standing areas in bars, coffee shops, etc.) | 2 |
| High occupation density: m2/person (classroom, sales areas, commercial areas, basement, etc.). | 1.6 |
| Moderately-high occupation density: 3-10 m2/person (gyms appliances exposition furniture sales, car sales, etc.). | 1.2 |
| Moderate occupation density: 10m2/person (offices, etc.) | 1 |
| Low occupation density: 10-20 m2/person (housing, hospitalization areas, parking subject to schedules, etc.) | 0.9 |
| Very low densities of occupation: 20-40 m2/person (archives, warehouses, parking lots, etc.) | 0.8 |
| No occupation areas. Occasional occupation only maintenance purposes | 0.2 |

$co6$ = Panic risk coefficient:

| Characteristic of the Compartment | Panic risk coefficient |
|---|---|
| Theatres, cinemas, auditoriums, etc. (El origin of the fire causing the scene may be situations in which occupants appreciate all the fire simultaneously and tend to evacuate once. | 1.45 |
| Nightclubs, ballrooms, etc. (Dimly lit places with music, overcrowded, with alcohol consumption, etc.). Tall Buildings. | 1.25 |
| Centers, trade fairs, exhibitions, etc. | 1.1 |
| There are circumstances that result in panic situation. | 1 |

co7 = Orientation coefficient:

| Characteristics of the sector | Orientation coefficient |
|---|---|
| Underground areas (upstream confluence of evacuation with smoke) | 1.35 |
| Tall Buildings. Blind building facades or compulsory evacuation routes due to operating regime. | 1.25 |
| With large areas from which you can not see outside the building facade or lines of shelves or aisles of goods that exceed 1.5 m in height or interior complex partitions requiring winding evacuation routes. | 1.15 |
| Having emergency exits or stairways serving both above and underground | 1.1 |
| Sector over first floor above ground | 1.05 |
| None of the above apply | 1 |

## 5. Architectural Characteristics (AC)

• ca1 = Compartment surface area coefficient:

| Compartment surface area coefficient* | Contribution to risk |
|---|---|
| Sc>25000 m2 | 3.00 |
| 20000≤Sc≤25000 m2 | 2.80 |
| 15000≤Sc≤20000 m2 | 2.50 |
| 10000≤Sc≤15000 m2 | 2.30 |
| 5000≤Scs≤10000 m2 | 2.00 |
| 4000≤Sc≤5000 m2 | 1.60 |
| 3500≤Sc≤4000 m2 | 1.50 |
| 2500≤Sc≤3000 m2 | 1.40 |
| 2000≤Sc≤2500 m2 | 1.30 |
| 1500≤Sc≤2000 m2 | 1.20 |
| 1000≤Sc≤1500 m2 | 1.10 |
| 500≤Sc≤1000 m2 | 1.00 |
| 250≤Sc≤500 m2 | 0.70 |
| Sc≤250 m2 | 0.50 |

• ac2 = Coefficient for height over flush-line:

| Sector evacuation height | Coefficient for height over flush-line |
|---|---|
| he>150 m | 6 |
| 80≤he≤150 m | 5 |
| 50≤he≤80 m | 4 |
| 28≤he≤50 m | 3 |
| Floor 6-9 (he≤28 m) | 2.2 |
| Floor 4-6 | 1.8 |
| Floor 3-4 | 1.6 |
| Floor 2 (3≤he≤6 m) | 1.2 |
| Floor 1 (he≤3 m) | 1 |
| Mezzanine (it has, at least, one building exit) | 0.8 |
| Ground floor | 0.6 |
| Area located below ground | 1 |

• ac3 = Coefficient of number of underground floors:

| Height ascending evacuation | Coefficient of number of underground floors |
|---|---|
| Basement floor 4th (≥-9 m) | 6 |
| Basement floor 3rd (he≤-9 m) | 5 |
| Basement floor 2nd (he≤-6 m) | 3 |
| Basement floor 1st (he≤5m) | 2 |
| Basement floor (having at least one exit off building) (he≤-3m) | 1.4 |
| It has not underground floor | 1 |

• ac4 = Ceiling height coefficient:

| Characteristics of the Ceiling Compartmet | Ceiling Height Coeficient |
|---|---|
| Free height ≤ 2.78 m | 1.25 |
| Free height 2.78-3.34 m | 1.15 |
| Free height 3.34-4 m | 0.9 |
| Free height 4-6 m | 0.7 |
| Free height 6-10 m | |
| Free height > 10 m | |
| Without three or two opposing facades | |
| Without cover | |

• ac5 = Coefficient of accessibility in facade:

| Type of Building | Coefficient of accessibility through facade |
|---|---|
| Buildings Type M | 1.25 |

(continued)

| Type of Building | Coefficient of accessibility through facade |
|---|---|
| Buildings Type N | 1.2 |
| Buildings Type Ñ | 1 |
| Buildings Type O | 0.9 |
| Buildings Type P | 0.85 |
| Buildings Type Q | 0.8 |

• ac6 = Coefficient depending on the thermal properties of the shell sector.

| Absorptivity (b) | Coefficient depending on the thermal properties of the shell sector |
|---|---|
| b<720 | 1.15 |
| 720≤b≤2500 | 1 |
| b<2500 | 0.85 |

• ac7 = Coefficient of the wall and roof ventilation:

$$ac7 = \left(\frac{6}{H}\right)\left[0,62 + 90x\left(\frac{(0,4 - a_v)^4}{(1 + b_v \ x \ a_b)}\right)\right]$$

Where:

$\alpha_v = A_v/A_f$ relationship between the surface openings in front and the floor surface of the sector, with the limits 0.025 < α <0.25        (B.4)

$$\alpha_h = A_\eta/A_f$$

relationship between the surface openings in the roof A and the built surface in sector

$$b_v = 12,5 \ (1 + 10 \ \alpha_v - \ \alpha_v \ 2) \geq 10 \qquad (B.5)$$

H Height of the fire sector [m]

The claimed method uses this formula to calculate the coefficient of wall and roof ventilation, although, to make it consistent with the rest of the weights assigned to the parameters of the method, this ratio is limited between the following values: $0.7 \leq AC7 \leq 1.4$

Self-Protection Plan Level (SPL).

| Self-Protection Characteristics* | Self-Protection Measures |
|---|---|
| Building that has the Self-Protection Plan, although it is not required by the legislation, and it is properly implemented. | 1,15 |

(continued)

| Self-Protection Characteristics* | Self-Protection Measures |
|---|---|
| Building Type A having measures remarkably more demanding than those provided by the self-protection plans, being human and material resources optimized for acting in case of emergency. | 1,2 |
| Type B building having measures remarkably more demanding than those provided by the self-protection plans, being human and material resources optimized for acting in case of emergency. | 1.15 |
| Type C having measures remarkably more demanding than those provided by the self-protection plans, being human and material resources optimized for acting in case of emergency. | 1.1 |
| Type A building with Self-Protection Plan according to current regulations. | 1 |
| Type B building with Self-Protection Plan according to current regulations. | 1 |
| Type C building with Self-Protection Plan according to current regulations. | 1 |
| Type A building without free self-protection plan or no plan in accordance with regulations in force* or poorly implemented | 0.5 |
| Type B building without free self-protection plan or no plan in accordance with regulations in force* or poorly implemented | 0.7 |
| Type C building without free self-protection plan or no plan in accordance with regulations in force* or poorly implemented | 0.8 |

Structural Fire Resistance (SFR)

| Grade of Structural Fire Resistance | Coefficient of Structural Fire Resistance |
|---|---|
| The Structural fire resistance is at least the established in the BD SI 6. 3 and 4 | 1.15 |
| The fire resistance of the structure is, at least, the equivalent to fire exposure time. | 1 |
| fire resistance unknown or not according to any bylaw. | 0.2 |

Fire Propagation (P)

• ip1.1 = Coefficient for the degree of fire resistance of the walls and ceilings fire sector:

| Degree of fire resistance of the walls and ceilings fire compartment | Coefficient for the degree of fire resistance of the walls and ceilings fire sector |
|---|---|
| EI 180 | 1.4 |
| EI 120 | 1.2 |
| EI 90 | 1 |
| EI 60 | 0.9 |
| EI 30 | 0.5 |
| Without fire resistance or with unknown resistance | 0.1 |
| No sector delimited by any fire | 1 |

• ip1.2 = Coefficient for the degree of fire resistance of doors

| Grade of fire resistance of doors | Coefficient for the degree of fire resistance of doors |
|---|---|
| The same fire resistance walls and ceilings | 1.05 |
| Half the fire resistance of the walls and ceilings | 1 |

• ip1.3 = Coefficient for the degree of compartmentalization of lifts spanning fire sectors.

| Types of configuration | Coefficient for the degree of compartmentalization of lifts spanning fire sectors |
|---|---|
| Both delimiting elements and elevator compartment access doors have the same degree of fire resistance that intersected sectors. | 1.15 |
| Located within a protected stairway. | 1.1 |
| Delimiting Elements with the same degree that intersected sectors having access to the compartment through a door EI 30-C5 or located in the isolation lobby of a specially protected stairway. | 1 |
| Delimited elements with the same degree that intersected sectors with access through lift gate E 30. | 0.9 |
| There are no elevators or no elevators crossing fire compartments | 1 |

• ip 1.4 = Coefficient under warranty closing fire doors in case of fire:

| Door Characteristics | Coefficient under warranty closing fire doors in case of fire |
|---|---|
| All firebreak doors equipped with:<br><br>• Device controlling doors locking: C 5 (UNE EN 1154: 2003).<br><br>• Double doors have the former + door coordination devices (UNE EN 1158:2003)<br><br>• Doors designated for open position will have an electromagnetic retention device (UNE EN 1155:2003) | 1 |
| Do not meet criteria for granting door closure. | 0.7 |

• IP2 installations intersect fire compartmentalization elements:

| Characteristics of the facilities | Coefficient by Facilities Pass through fire compartmentalization elements |
|---|---|
| Compartmentalization is maintained despite a crossing installation (cables, pipes, ducts, ventilation ducts, etc.) Even installations having a section not exceeding 50 cm$^2$. | 1.2 |
| Compartmentalization is maintained despite a crossing installation (cables, pipes, ducts, ventilation ducts, etc.) | |

(continued)

| Characteristics of the facilities | Coefficient by Facilities Pass through fire compartmentalization elements |
|---|---|
| Excluding installations having a section not exceeding 50 cm$^2$. | 0.8 |
| Compartmentalization is not maintained through crossing installations | 0.5 |

• ip = 3.1 Type of fire reaction of construction elements

| Characteristics of the construction elements | Coefficient by the Type of reaction to fire performance of construction elements |
|---|---|
| Roof and walls: A2-s1, d0. Floors: A2$_{FL}$-s1 | 1.3 |
| The floors fulfill the regulations. Walls and roofs: A2-s1, d0 | 1.2 |
| Fulfill table 4.1 types of reaction to fire of construction elements. | 1 |
| The type of reaction to fire of construction elements do not fulfill Table 4.1 or if it is Housing Residential use. | 0.6 |

• ip 3.2 = Type of reaction to fire of coating textile elements

| Characteristics of coating textile elements | Types of reaction to fire performance of textile items covered |
|---|---|
| will be M2 according to UNE 23727:1990 "Fire reaction tests for materials used in construction. Classification of materials used in construction". | 1 |
| will not be M2 according to UNE 23727:1990 "Fire reaction tests for materials used in construction. Classification of materials used in construction". | 0.6 |
| There are no textile coating elements | 1 |

• ip 3.3 = Type of reaction to fire of the decorative elements and furniture

| Characteristics of the decorative elements and furniture | Type of reaction to fire of the decorative elements and furniture |
|---|---|
| According to the Table: Type of reaction to fire of the decorative elements and furniture | 1 |
| Type of reaction to fire of the decorative elements and furniture is worse than expected in the Table: Type of reaction to fire of decorative elements and furniture | 0.7 |
| Without the presence of decorative elements or furniture (chairs, fixed seating and hanging textile elements). | 1 |

OP = Basic requirement outdoor propagation
• op1 = Coefficient for limiting extension through facade and shell by fire resistant elements:

| Characteristics of the elements that limit extension through facade and shell by fire resistant elements | Coefficient of limiting the spread of facade and covered by fire resistant elements |
|---|---|
| Vertical outdoor propagation is limited according to regulations and always through a strip of at least 1.5 m. Horizontal outdoor propagation is limited according to regulations and always through a strip of at least | 1.1 |
| 1 m. outdoor propagation through the shell is limited according to regulations. | |
| Vertical and horizontal outdoor fire propagation and shell propagation are limited according to regulations | 1 |
| Vertical and horizontal outdoor fire propagation and shell propagation is not limited according to regulations | 0.8 |
| In EGAS, Vertical and horizontal outdoor fire propagation and shell propagation is not limited according to regulations. | 0.6 |
| Fire compartment not delimited by another compartment through facade or shell. | 1 |

• op2 = Coefficient for limiting the reaction to fire of the facade and shell.

| Characteristic of the elements in facade and cover | Coefficient by limiting the reaction to fire of the facade and cover |
|---|---|
| The extent of reaction to fire of facade materials or shell (B-s3, d2 and BROOF (t1) respectively) is extended to the entire facade and shell. | 1.05 |
| Facades B-s3, d2 to a height of 3.5 m as a minimum, and deck areas to less than 5 m away from the vertical projection of any facade area BROOF (t1). | 1 |
| Type of reaction to fire of materials is not limited | 0.75 |
| Fire compartment with no bounds with façade or shell. | 1 |

OE1 number of exits

| Characteristics | Exit Number and Distribution |
|---|---|
| Compartments or floors which, not requiring 2 exits according to Table 3.1 of DB SI 3, have two or more exits per floor. | 1.7 |
| Compartments or floors requiring and having more that 2 exists configuring a Q-type geometrical arrangement. | 1.7 |
| Compartments or floors requiring and having more than 2 exists configuring a P-type geometrical arrangement. | 1.6 |
| Compartments or floors requiring and having more than 2 exists configuring a O-type geometrical arrangement. | 1.5 |
| Compartments or floors that can have and have one unique exists configuring a N-type geometrical arrangement. | 1 |
| Compartments or floors that can have and have one unique exists configuring a N-type geometrical arrangement. | 0.9 |

(continued)

| Characteristics | Exit Number and Distribution |
|---|---|
| Compartments or floors that can have and have one unique exists configuring a M-type geometrical arrangement. | 0.8 |
| Compartments or floors which, according to Table 3.1 of DB SI 3, require more than one exit and have one unique exit. | 0.4 |

OE2 Length of the evacuation route

| Characteristics | Length of the evacuation route |
|---|---|
| Compartments having one unique floor exit: evacuation route length to closest exit ≤ 15 m | 1,6 |
| Compartments having one unique floor exit: evacuation route length to closest exit ≤ 25 m | 1 |
| Compartments having one unique floor exit: evacuation route length to closest exit ≤ 31,25 m | 0.8 |
| Compartments having one unique floor exit: evacuation route length to closest exit > 31,25 m | 0.3 |
| Compartments having more than one floor exit: evacuation route length to closest exit ≤ 25 m | 1.7 |
| Compartments having more than one floor exit: evacuation route length to closest exit ≤ 35 m | 1.4 |
| Compartments having more than one floor exit: evacuation route length to closest exit ≤ 50 m | 1 |
| Compartments having more than one floor exit: evacuation route length to closest exit ≤ 65 m | 0.8 |
| Compartments having more than one floor exit: evacuation route length to closest exit >65 m | 0.4 |

OE3 dimensions of evacuation elements

| Characteristics of the dimensions | dimensions of evacuation elements |
|---|---|
| Over three times the dimensions prescribed by the TBC | 1.7 |
| Two to three times the dimensions prescribed by the TBC | 1.5 |
| 50%-100% over the dimensions prescribed by the TBC | 1.3 |
| Exactly the dimensions prescribed by the TBC | 1 |
| Up to 25% under the dimensions prescribed by the TBC | 0.5 |
| Below 75% under the dimensions prescribed by the TBC | 0.2 |

OE4.1 vertical, horizontal or mixed evacuation

| Characteristics | vertical, horizontal or mixed evacuation |
|---|---|
| Evacuation up to safe exterior through horizontal routes | 1 |
| Evacuation up to safe exterior through horizontal or vertical routes (Building exits, stairs, etc.) | 0.4 |

(continued)

| Characteristics | vertical, horizontal or mixed evacuation |
|---|---|
| Evacuation through vertical routes | 1 |

### OE 4.2 horizontal exits

| Characteristics | Horizontal exits |
|---|---|
| Building exits | 3 |
| Floor exits to a contiguous compartment or through protected corridor to safe exterior. | 0.4 |

### OE4.3 vertical exits

| Characteristics | Vertical exits |
|---|---|
| Floor exit to a contiguous compartment where a protected stairway provide the evacuation route. | 2,3 |
| Floor exit to a contiguous compartment where open stairs provide the evacuation route. | 1.1 |
| Specially protected stairway | 2.2 |
| Protected stairway and corridors | 2 |
| Stairway compartmentalized according to the fire resistance of crossing sectors | 1.4 |
| Open stairways (up to third floor over ground floor) | 0.8 |
| Open stairways | 0.6 |

### OE4.4 stairs continuity

| Characteristics | stairs continuity |
|---|---|
| Specially protected, compartmentalized stairways lead to safe exterior directly or to a minimal risk compartment. | 1.2 |
| Open stairways | 1 |
| Stairways without continuity in protection means | 0.8 |

### OE4.5 protected evacuation means ventilation

| Characteristics | stairs continuity |
|---|---|
| Specially protected and protected stairways ventilation by overpressure | 1.25 |
| Passive ventilation (windows, conduits, etc) | 1.05 |
| There are no protected stairways or corridors requiring ventilation | 1 |
| protected stairways or corridors without ventilation | 0.85 |

### OE5.1 doors opening direction

| Door Characteristics | doors opening direction |
|---|---|
| Door will open towards evacuation direction | 1.05 |
| Doors designed for over 100 people or for over 50 occupants in the compatment open towards evacuation direction | 1 |

(continued)

| Door Characteristics | doors opening direction |
|---|---|
| Doors designed for over 100 people or for over 50 occupants in the compatment do not open towards evacuation direction | 0.9 |

OE5.2 door opening devices

| Door Characteristics | door opening devices |
|---|---|
| Door opening device consisting on a horizontal bar for pushing open according to regulation UNE EN 1125:2003 VC1 | 1.05 |
| People not familiar with the door and opening towards evacuation direction. Door opening device consisting on a horizontal bar for pushing open according to regulation UNE EN 1125:2003 VC1 | 1 |
| People familiar with the door: handle or push opening device according to regulation UNE EN 179:2003 VC1 | 1 |
| Opening devices not subjected to regulations. | 0.9 |

OE5.3 door type

| Door Characteristics | Door type |
|---|---|
| Swinging doors with vertical axis of rotation | 1.05 |
| Doors designed for exiting the floor or building and those designed to allow exiting over 50 are swinging doors with vertical axis of rotation | 1 |
| Doors designed for exiting the floor or building and those designed to allow exiting over 50 are not swinging doors with vertical axis of rotation. | 0.9 |

OE5.4 automatic door type

| Door Characteristics | Door located on a evacuation route |
|---|---|
| Revolving or automatically opened doors with granted performing on emergencies according to normatives. | 1 |
| Revolving or automatically opened doors without granted performing on emergencies according to normatives. | 0.8 |
| No revolving or automatically opened doors | 1 |

OE6 sinage of evacuation means,

| Sinage Characteristics | Sinage of evacuation means |
|---|---|
| Evacuation means ae systematized according to DB SI 3.7. criteria. Exiting serials comply with normative UNE 23034:1988. Signals are visible even in lighting systems fail. Sinage system complies with bylaws for handicapped people. | 1 |
| No sinage system or sinage system not according to regulation. | 0.6 |

OE7 fire smoke control ASHES (air entrance and smoke and heat extraction systems)

| Types of ASHES in the compartment | fire smoke control |
|---|---|
| One ASHES according to UNE 23585:2004 y EN 12101- 26:2005 | 2 |
| Ventilation system in parking lots according to the provisions of DB SI 3.8.2 sections a), b) y c). | 1.5 |
| Without ASHES | 1 |

OE8 evacuation of handicapped people in case of fire

| evacuation of handicapped people in case of fire | Coefficient for handicapped people evacuation |
|---|---|
| As required by the DB SI, floors present a way to an alternative fire compartment by exiting the floor or a refuge area suitable for the allowed number of places. Will count with some accessible itinerary towards them among all regulated evacuation origins. Building exiting floors comprise any regulated itinerary accessible from all origins of evacuation located in an accessible area up to the exit of the building. | 1.2 |
| regulatory conditions are not met even when required by the DB SI | 0.7 |
| Not required by the DBSI, the building allows for evacuation of handicapped people according to the security conditions described above. | 1.3 |
| Not required by the DBSI, the building does not allow for evacuation of handicapped people | 0.9 |
| Accessibility conditions in case of fire are not evaluated. | 1 |

fpsi1.1 availability of detection and fire alarm

| Characteristics | availability of detection and fire alarm |
|---|---|
| detection and fire alarm availability | 1 |
| detection and fire alarm not available | 0.7 |

fpsi1.2 detection type

| Provision of detection and fire alarm system in the compartment | Detection type |
|---|---|
| Early detection by aspiration systems | 1.6 |
| detection by fire or flames detector | 1.5 |
| detection by thermic detector/sprinkler | 1.4 |
| Manual fire alarm system | 1 |

fpsi1.3 detector identifier

| Characteristics | detector identifier |
|---|---|
| With detector identification (analogical) | 1.1 |
| Without detector identification | 1 |

fpsi1.4 fire alarm system

| Provision of detection and fire alarm system in the compartment | fire alarm system |
|---|---|
| Loudspeaker communication of alarm | 1.1 |
| Sirens communication of alarm | 1 |

fpsi1.5 supervised detection center

| Provision of detection and fire alarm system in the compartment | supervised detection center |
|---|---|
| Permanently supervised center | 1.1 |
| Not permanently supervised center | 0.8 |

fpsi1.6 detection center connected to firefighter headquarters

| Provision of detection and fire alarm system in the compartment | Detection and fire alarm system |
|---|---|
| detection center connected to firefighter headquarters | 1.2 |
| detection center not connected to firefighter headquarters | 1 |

fpsi2.1 manual extinction installation

| Provision of manual extinction installation | manual extinction installation |
|---|---|
| portable fire extinguisher available | 1 |
| portable fire extinguisher not available | 0.7 |

fpsi2.2 dry column

| Provision of manual extinction installation | Dry column |
|---|---|
| Dry column (buildings of h>24 m or more than 3 floors over ground floor) | 1.2 |
| Dry column (buildings of h<24 m) | 1.1 |
| No dry column | 1 |

fpsi2.3 Hydrants

| Provision of manual extinction installation | Hydrants |
|---|---|
| With hydrant | 1.1 |
| Without hydrant | 0.8 |

fpsi2.4 equipped hydrants;

| Provision of manual extinction installation | BIEs |
|---|---|
| BIEs 45mm | 1.4 |
| BIEs 25 mm | 1.35 |
| No BIEs | 0.9 |

fpsi3.1 protection area

| Provision of manual extinction installation | Protected area |
|---|---|
| The entire compartment is protected by an automatic extinction system | 1 |
| BISpecial risk compartments are protected by an automatic extinction system | 0.4 |
| No automatic extinction system | 1 |

fpsi3.2 aim of design

| Provision of manual extinction installation | Aim of design |
|---|---|
| Extinguishing fire | 4.5 |
| Suppressing fire | 4 |
| Controlling fire | 3.5 |

fpsi4.1 fire protection signage system

| Provision | signage system for fire protection installation |
|---|---|
| signage system for fire protection installation | 1 |
| No signage system for fire protection installation | 0.9 |

fpsi4.2 emergency elevators

| Provisions | ergency elevators |
|---|---|
| Not EGAS or hospital use (h>15 m) and count with emergency elevators | 1.3 |
| EGAS or hospital use (h>15 m) and count with emergency elevators | 1.2 |
| Not EGAS or hospital use (h>15 m) and do not count with emergency elevators | 1 |
| EGAs or Hospital without emergency elevators | 0.7 |

fpsi4.3 emergency lighting

| Provision | emergency lighting |
|---|---|
| emergency lighting available | 1 |
| No emergency liqhtinq available | 0.3 |

fi1 firefighter accessibility and surroundings

| Characteristics | firefighter accessibility and surroundings |
|---|---|
| Buildings having falling evacuation heights ≤ 9 m and with one or more accessible facades | 1.1 |
| Fulfills DB SI 5* accessibility conditions, providing 4 accesible facades | 1.4 |
| Fulfills DB SI 5* accessibility conditions, providing 3 accesible facades | 1.3 |
| Fulfills DB SI 5* accessibility conditions, providing 2 accesible facades | 1.2 |
| Fulfills DB SI 5* accessibility conditions, providing 1 accesible facades | 1 |

(continued)

| Characteristics | firefighter accessibility and surroundings |
|---|---|
| Buildings having falling evacuation heights ≤ 9 m and no accessible facades | 0.9 |
| Buldings not fullfilling DB SI 5* accessibility conditions. | 0.2 |

fi2 distance to the firefighter headquarters

| Characteristics | distance to the firefighter headquarters |
|---|---|
| distance to a public firefighter headquarter ≤ 5 Km | 1.4 |
| distance to a public firefighter headquarter 5-10 Km | 1.1 |
| distance to a public firefighter headquarter 10-25 Km | 0.8 |
| distance to a public firefighter headquarter 25-50 Km | 0.5 |
| distance to a public firefighter headquarter > 50 Km | 0.4 |

fi3 private firefighters

| Characteristics | private firefighters |
|---|---|
| Permanent private firefighter team at the building, able of effectively and immediately intervening in case of fire. | 7 |
| No private firefighters | 1 |

In the case the regulation change, the method can be upgraded simply by changing the parameters that have been affected with the change, thus preventing it from becoming obsolete, as happened with existing methods in the prior art.

In conclusion, the claimed method constitutes a significant advance in the building security sector allowing for an increase in the efficiency, robustness and reliability of the results, without losing sight of the simplicity in its use.

**Claims**

1. Method of assessment of the risk in case of fire in a building used to calculate the level of risk occupants of a building are exposed to in the event of a fire of accidental origin, in order to take the precise measures for establishing an adequate level of security comprising this method the following steps:

- Harvesting of data related to: Number of Occupants (NO), Occupant Characteristics (OC), Building features influencing the onset, development and propagation of fire (T), Architectural Characteristics (AC), Building's Self-Protection Plan (SPP), Structural Fire Resistance (SFR), Features for preventing both, inwards and onwards fire propagation (P), Emergency Evacuation Means (EM), Fire Protection System Installation (FPSI) and Firefighter Accessibility (FFA); Real-time data harvesting may be performed by using devices installed in the building such as: people entry/exit sensors (lathe-like or the equivalent), device for entering a code of a rating system for a variety of activities that may be performed and/or maintenance tasks that can start a fire, sensors for detecting large carts or luggage located in the access to the building, sensors for measuring the density of the different compartments of the building (thermal type, artificial vision or the equivalent), sensors for evaluating: water pressure, water level in the tank, the operating state of the pumping unit, the operating state of the emergency lighting, sprinklers, emergency elevators, firewall doors and gates and emergency power supply;
- Weighting harvested data according to established tables linking each parameter with an impact factor, depending on their greater or lesser incidence;
- Introducing the weighted data in a data-processing system that applies a series of formulas for the calculation of the building's global risk;
- Determining if the retrieved global risk level falls within the limits of security or not, and identification of the degree of deviation;

- implementing the subsequent corrective measures in the building if the Global Risk Level is not on the side of safety by reducing risk (limitation of the height under or above the flush line, limitation of activities that may be performed, limitation of the compartmentalization surface, etc.), increasing in passive protection means (increasing the fire resistance of structure and/or the elements of compartmentalization, increasing the level of protection, the number, provision and dimensions of escape routes and means) or increasing active protection (control systems and heat and smoke clearance, fire extinguishers equipped fire hydrants, fire alarm and detection system, emergency lighting, sprinkler installation, emergency elevators, ...), including real-time actions inside the building through the activation of the data-processing system visual and/or acoustic warnings and actuators supporting the blockage of lathes in order to prevent access to the building, locking oxygen valves and acclimatization system and activation of loudspeaker systems.

2. Method of assessment of the risk in case of fire in a building according to claim 1 where the formula for the calculation of the overall risk level of the building is the ratio between the Potential Risk and the level of Global Protection, where the Potential Risk is function of the principal parameters: Number of People Exposed (NPE), fire Tetrahedron (T) Characteristics of the Occupants (CO), Architectural Characteristics (AC); and where the level of Global Protection is function of the principal parameters: Level of Self-Protection Plan (LPA), basic requirement of Structural Fire Resistance (SFR), Propagation of the fire (P), basic requirement Evacuation of Occupants (EO), basic requirement Fire Protection Installations (FPI) and basic requirement Firefighters Intervention (FI).

3. Method of assessment of the risk in case of fire in a building according to claim 2 **characterized in that**, for the calculation of the potential Risk, the relationship between the principal parameters is as follows: Potential Risk NPE = x (0.4 T + CO 0.3 + 0.3 CA).

4. Method of assessment of the risk in case of fire in a building according to claim 2 **characterized in that** the NPE parameter takes the following values:

| Number of People Exposed | Coefficient depending on the number of people exposed |
|---|---|
| Occupation > 10000 people | 1, 6 |
| Occupation 5000-10000 people | 1, 5 |
| Occupation 1000-5000 people | 1, 4 |
| Occupation 500-1000 people | 1, 3 |
| Occupation 225-500 people | 1, 2 |
| Occupation 65-225 people | 1 |
| Occupation 0-65 people | 0.8 |
| Null Occupation Sector | 0.15 |

5. Method of assessment of the risk in case of fire in a building according to claim 2 **characterized in that** the fire Tetrahedron (T) is calculated according to the following secondary parameters: combustible (TC), comburent (TCM), energy of activation (TEA) and coefficient of Chain Reaction (CRT).

6. Method of assessment of the risk in case of fire in a building according to claim 5 **characterized in that** secondary parameters for the calculation of the fire tetrahedron (T) interrelate as follows:

$$T = TC \times TCM \times TEA \times CRT$$

7. Method of assessment of the risk in case of fire in a building according to claim 5 **characterized in that** the secondary parameter combustible (TC) is calculated as a function of the parameters: c1 transferable fire load, c2 hazard coefficient of transferable fire load, c3 hazard coefficient for combustibility, c4 hazard coefficient for smoke, c5 hazard coefficient for corrosion or toxicity and c6 coefficient of speed of fire development.

8. Method of assessment of the risk in case of fire in a building according to claim 7 **characterized in that** the parameter combustible (TC) is calculated as: $\mathsf{TC} = \prod_{i=1}^{i=6} Ci$

9. Method of assessment of the risk in case of fire in a building according to claim 8 **characterized in that** the parameters c1 transferable fire load, c2 hazard coefficient of transferable fire load, c3 hazard coefficient for combustibility, c4 hazard coefficient for smoke, c5 hazard coefficient for corrosion or toxicity and c6 coefficient of speed of fire development, take the following values:

c1 transferable fire load

| Fire Compartment Use | transferable fire load: q |
|---|---|
| Commercial | 1.4 |
| Residential housing | 1.4 |
| Hospital | 1.1 |
| Residential public | 1.1 |
| Administrative | 1.3 |
| Teacher | 1.2 |
| Public premises | 1.1 |
| Garage parking | 1.1 |

c2 hazard coefficient of transferable fire load

| Characteristics | transferable fire load |
|---|---|
| Combustible transferable structure (concrete, steel, brick) and combustible facade and/or roof (wood, plastics, etc.) | 1.3 |
| Combustible transferable structure (concrete, steel, brick) and noncombustible facade and/or roof | 1.2 |
| Incombustible transferable structure (concrete, steel, brick) and combustible facade and/or roof (wood, plastics, etc.) | 1.1 |
| Incombustible transferable structure (concrete, steel, brick) and incombustible facade and/or roof with multiple layer, being the external layers incombustible | 1.05 |
| Incombustible transferable structure (concrete, steel, brick) and incombustible facade and/or roof. | 1 |

c3 hazard coefficient for combustibility

| Fire Compartment Use | hazard coefficient for combustibility |
|---|---|
| Commercial | 1.2 |
| Residential housing | 1.2 |
| Hospital | 1.2 |
| Residential public | 1.2 |
| Administrative | 1 |
| Teacher | 1.2 |
| Public premises | 1.2 |
| Garage parking | 1.2 |

c4 hazard coefficient for smoke

| Fire Compartment Use | hazard coefficient for combustibility |
|---|---|
| Commercial | 1.2 |
| Residential housing | 1 |
| Hospital | 1 |
| Residential public | 1 |
| Administrative | 1 |
| Teacher | 1 |
| Public premises | 1 |
| Garage parking | 1.2 |

c5 hazard coefficient for corrosion or toxicity

| Fire Compartment Use | hazard coefficient for corrosion or toxicity |
|---|---|
| Commercial | 1.2 |
| Residential housing | 1 |
| Hospital | 1 |
| Residential public | 1 |
| Administrative | 1 |
| Teacher | 1 |
| Public premises | 1 |
| Garage parking | 1.2 |

c6 coefficient of speed of fire development

| Fire Compartment Use | coefficient of speed of fire development |
|---|---|
| Commercial | 1.4 |
| Residential housing | 1.2 |
| Hospital | 1.2 |
| Residential public | 1.2 |
| Administrative | 1.2 |
| Teacher | 1.2 |
| Public premises | 1.4 |
| Garage parking | 1 |

10. Method of assessment of the risk in case of fire in a building according to claim 5 **characterized in that** the parameter comburent (TCM) takes the following values.

| Comburent | Contribution to Risk |
|---|---|
| Rich oxygen atmosphere (hospitalization etc.) | 1.3 |

(continued)

| Comburent | Contribution to Risk |
|---|---|
| Normal Atmosphere | 1 |
| Inert air ventilation. Preventive mode: 15%-16% $O_2$ | 0.5 |
| Inert air ventilation. extintion mode: 10%-12% $O_2$ | 0.3 |

**11.** Method of assessment of the risk in case of fire in a building according to claim 5 **characterized in that** the parameter energy of activation (TEA) is calculated according to the parameters: ea1 hazard coefficient for activation, ea2 hazard coefficient for special risks, ea3 hazard coefficient for reparation, ea4 hazard coefficient for the state of the electrical installation and ea5 hazard coefficient for heating and flammable decoration elements.

**12.** Method of assessment of the risk in case of fire in a building according to claim 11 **characterized in that** the parameter activation energy (TEA) is calculated as: $TEA = \prod_{i=1}^{i=5} eai$

**13.** Method of assessment of the risk in case of fire in a building according to claim 12 **characterized in that** the parameters ea1 hazard coefficient for activation, ea2 hazard coefficient for special risks, ea3 hazard coefficient for reparation, ea4 hazard coefficient for the state of the electrical installation and ea5 hazard coefficient for heating and flammable decoration elements, take the following values:

ea1 hazard coefficient for activation

| Fire Compartment Use | hazard coefficient for corrosion or toxicity |
|---|---|
| Commercial (1) | 1 |
| Residential housing | 1 |
| Hospital | 1 |
| Residential public | 1 |
| Administrative | 0.85 |
| Teacher | 0.85 |
| Public premises | 1 |
| Garage parking | 1 |

ea2 hazard coefficient for special risks

| Special Risks existing in the compartment | hazard coefficient for special risks in the fire compartment |
|---|---|
| Existing high special risk without protection according to TBC | 7 |
| Existing medium special risk without protection according to TBC | 5 |
| Existing low special risk without protection according to TBC | 4 |
| Existing high special risk with protection according to TBC | 1.3 |
| Existing medium special risk with protection according to TBC | 1.2 |
| Existing low special risk with protection according to TBC | 1.1 |
| No special risks exist | 0.85 |

ea3 hazard coefficient for reparation

| Scope and activities of the works in the compartment | hazard coefficient for reparation |
|---|---|
| Comprehensive intervention activities that can easily cause a fire (ex. welding, flame cutting torch, asphalt fabric treatment on roofs, radial, etc.). | 1.35 |
| Comprehensive intervention activities that could cause a fire. | 1.2 |
| Punctual intervention activities (in time and space) that can easily cause a fire (ex. welding,flame cutting torch, asphalt fabric treatment on roofs, radial, etc.). | 1.1 |
| Punctual intervention activities (in time and space) that could cause a fire. | 1.05 |
| No reparation works | 1 |

ea4 hazard coefficient for the state of the electrical installation

| Characteristics | hazard coefficient for the state of the electrical installation |
|---|---|
| Not according to low voltage electro-technical regulations nor with other relevant by law in force | 1.45 |
| According to low voltage electro-technical regulations and with other relevant bylaw in force | 1 |

ea5 hazard coefficient for heating and flammable decoration elements

| Type of heating or flammable decoration elements | hazard coefficient for heating and flammable decoration elements |
|---|---|
| Utilization of combustible decorations (candles, lanterns, torches, etc.) in the presence of hanging textile items (curtains, draperies, screens, etc..). | 1.35 |
| Heaters using live flame (gas, coal, kerosene, etc.) chimneys without cassette. | 1.25 |
| Use of combustible decorative elements (candles, lanterns, torches, etc.) | 1.15 |
| Heaters without live flame (electrical, etc.) chimneys with cassette. | 1.05 |
| Without individual heater or flammable decoration elements | 1 |

**14.** Method of assessment of the risk in case of fire in a building according to claim 5 **characterized in that** the parameter coefficient of Chain Reaction TCR takes the following values:

| Compartment classification | Chain Reaction |
|---|---|
| Type I | 1.45 |
| Type II | 1.30 |
| Type III | 1.20 |
| Type IV | 1.10 |
| Type V | 1 |
| Type VI | 0.85 |

(continued)

| Compartment classification | Chain Reaction |
|---|---|
| Type VI | 0.5 |

Compartments being seven architectonical typologies corresponding to:

Type I: Sectors that impede and limit the horizontal and vertical spread of fire, which interior configuration it is clear but comprises multiple inner sectors which constitute fire compartments.
Type II: Sectors that impede and limit the horizontal and vertical spread of fire divided, in addition, inner sectors with fixed walls: partitions, doors, etc., not resistant to fire, that hinder the spreading of the fire and which enclosed floor area (Se) is < 50 m 2
Type III: Sectors that impede and limit the horizontal and vertical spread of fire.
Type IV: Sectors that make it difficult and limit the vertical spread of fire.
Type V: sectors that impede and limit the horizontal spread of the fire.
Type VI: sectors without partition which do not prevent the horizontal or vertical spread of fire.
Type VII: Building of great volume which favor and accelerates the horizontal and vertical spread of fire.

15. Method of assessment of the risk in case of fire in a building according to claim 2 **characterized in that** the parameter Characteristics of the Occupants (CO) is function of the following parameters: co1 coefficient of vulnerability for occupants physically or psychically handicapped co2 coefficient of familiarity of the occupants with the building, co3 coefficient for sleeping occupants, co4 risk coefficient due to the use of large trucks, luggage, etc, co5 coefficient of occupation density, co6 coefficient of risk due to panic situation and co7 coefficient of orientation.

16. Method of assessment of the risk in case of fire in a building according to claim 2 **characterized in that** the parameter Characteristics of the Occupants (CO) is calculated as: $CO = \prod_{i=1}^{i=7} coi$

17. Method of assessment of the risk in case of fire in a building according to claim 15 **characterized in that** the parameters co1 coefficient of vulnerability for occupants physically or psychically handicapped co2 coefficient of familiarity of the occupants with the building, co3 coefficient for sleeping occupants, co4 risk coefficient due to the use of large trucks, luggage, etc, co5 coefficient of occupation density, co6 coefficient of risk due to panic situation and co7 coefficient of orientation, take the following values:

co1 coefficient of vulnerability for occupants physically or psychically handicapped

| Type of occupants in the compartment | Coefficient of vulnerability for occupants physically or psychically handicapped |
|---|---|
| Nursery (0-3 years), hospitalization, Alzheimer's patients, etc. | 3 |
| Nursing homes, geriatric, day centers, children education centers (3-6 years), special education centers, etc. | 2.4 |
| Primary (6-12 years), physically or psychically handicapped to a moderate degree, etc. | 1.6 |
| Hotels, Houses, etc. | 1 |
| People mostly valid for self-evacuation or surrounded by people who can help them in an emergency (university centers, administrative use, etc.) | 0.9 |

co2 coefficient of familiarity of the occupants with the building

| Type of building | Coefficient of familiarity of the occupants with the building |
|---|---|
| Majority of occupants with little or no familiarity with the building (e.g. hotels, hospitals, theaters, etc.). | 1.35 |

(continued)

| Type of building | Coefficient of familiarity of the occupants with the building |
|---|---|
| Presence in the building of occupants without familiarity (malls, public administrative use, etc.) | 1.2 |
| Most of the occupants are familiar with the building (private Administrative Use, etc.) | 1 |
| Occupants very familiar with the building (Use Residential Housing, housing park, etc.) | 0.8 |

co3 coefficient for sleeping occupants

| Type of use | coefficient for sleeping occupants |
|---|---|
| Possible presence of sleeping occupants (Use Residence Housing, Residential Public And Hospital Use) | 1.45 |
| Lack of sleeping occupants | 1 |

co4 Risk coefficient due to the use of large trucks, luggage, etc.

| Type of use | Risk coefficient due to the use of large trucks, luggage, etc. |
|---|---|
| With the presence of shopping carts (e.g. hypermarkets, transport terminals with trunk cars, etc.) | 1.45 |
| Users with suitcases, trolleys, etc. (e.g. transport terminals medium or long distance without trunk car service, etc.) | 1.2 |
| It not is expected the use of cars, luggage, trunk or similar | 1 |

co5 coefficient of occupation density

| Occupation Densities | Density Coefficient |
|---|---|
| Great occupation densities < 0.5 m2/person (standing spectator areas, public areas in nightclubs, etc.) | 2.5 |
| Very high occupation density: 0.5-1 m2/person (multiple use saloons, public standing areas in bars, coffee shops, etc.) | 2 |
| High occupation density: m2/person (classroom, sales areas, commercial areas, basement, etc.). | 1.6 |
| Moderately-high occupation density: 3-10 m2/person (gyms appliances exposition furniture sales, car sales, etc.). | 1.2 |
| Moderate occupation density: 10m2/person (offices, etc.) | 1 |
| Low occupation density: 10-20 m2/person (housing, hospitalization areas, parking subject to schedules, etc.) | 0.9 |
| Very low densities of occupation: 20-40 m2/person (archives, warehouses, parking lots, etc.) | 0.8 |
| No occupation areas. Occasional occupation only maintenance purposes | 0.2 |

co6 coefficient of risk due to panic situation

| Characteristic of the Compartment | Panic risk coefficient |
|---|---|
| Theatres, cinemas, auditoriums, etc. (El origin of the fire causing the scene may be situations in which occupants appreciate all the fire simultaneously and tend to evacuate once. | 1.45 |
| Nightclubs, ballrooms, etc. (Dimly lit places with music, overcrowded, with alcohol consumption, etc.). Tall Buildings. | 1.25 |
| Centers, trade fairs, exhibitions, etc. | 1.1 |
| There are circumstances that result in panic situation. | 1 |

co7 coefficient of orientation

| Characteristics of the sector | Orientation coefficient |
|---|---|
| Underground areas (upstream confluence of evacuation with smoke) | 1.35 |
| Tall Buildings. Blind building facades or compulsory evacuation routes due to operating regime. | 1.25 |
| With large areas from which you can not see outside the building facade or lines of shelves or aisles of goods that exceed 1.5 m in height or interior complex partitions requiring winding evacuation routes. | 1.15 |
| Having emergency exits or stairways serving both above and underground | 1.1 |
| Sector over first floor above ground | 1.05 |
| None of the above apply | 1 |

18. Method of assessment of the risk in case of fire in a building according to claim 2 **characterized in that** the parameter Architectural Characteristics (AC) is function of the following parameters: ac1 compartment surface area coefficient, ac2 height over flush-line coefficient, ac3 height under flush-line coefficient, ac4 ceiling height coefficient, ac5 facade accessibility coefficient, ac6 shell thermal features coefficient, ac7 facade and shell ventilation coefficient.

19. Method of assessment of the risk in case of fire in a building according to claim 18 **characterized in that** the parameter architectural characteristics (AC) is calculated as: $\prod_{i=1}^{i=7} aci$

20. Method of assessment of the risk in case of fire in a building according to claim 18 **characterized in that** parameters ac1 compartment surface area coefficient, ac2 height over flush-line coefficient, ac3 height under flush-line coefficient, ac4 ceiling height coefficient, ac5 facade accessibility coefficient, ac6 shell thermal features coefficient, ac7 facade and shell ventilation coefficient, take the following values:

ac1 = Compartment surface area coefficient:

| Compartment surface area coefficient* | Contribution to risk |
|---|---|
| Sc>25000 m2 | 3.00 |
| 20000≤Sc≤25000 m2 | 2.80 |
| 15000≤Sc≤20000 m2 | 2.50 |
| 10000≤Sc≤15000 m2 | 2.30 |
| 5000≤Scs≤10000 m2 | 2.00 |
| 4000≤Sc≤5000 m2 | 1.60 |
| 3500≤Sc≤4000 m2 | 1.50 |
| 2500≤Sc≤3000 m2 | 1.40 |

(continued)

| Compartment surface area coefficient* | Contribution to risk |
|---|---|
| 2000≤Sc≤2500 m2 | 1.30 |
| 1500≤Sc≤2000 m2 | 1.20 |
| 1000≤Sc≤1500 m2 | 1.10 |
| 500≤Sc≤1000 m2 | 1.00 |
| 250≤Sc≤500 m2 | 0.70 |
| Sc≤250 m2 | 0.50 |

• ac2 = Coefficient for height over flush-line:

| Sector evacuation height | Coefficient for height over flush-line |
|---|---|
| he>150 m | 6 |
| 80≤he≤150 m | 5 |
| 50≤he≤80 m | 4 |
| 28≤he≤50 m | 3 |
| Floor 6-9 (he≤28 m) | 2.2 |
| Floor 4-6 | 1.8 |
| Floor 3-4 | 1.6 |
| Floor 2 (3≤he≤6 m) | 1.2 |
| Floor 1 (he≤3 m) | 1 |
| Mezzanine (it has, at least, one building exit) | 0.8 |
| Ground floor | 0.6 |
| Area located below ground | 1 |

• ac3 = Coefficient of number of underground floors:

| Height ascending evacuation | Coefficient of number of underground floors |
|---|---|
| Basement floor 4th (≥-9 m) | 6 |
| Basement floor 3rd (he≤-9 m) | 5 |
| Basement floor 2nd (he≤-6 m) | 3 |
| Basement floor 1st (he≤5m) | 2 |
| Basement floor (having at least one exit off building) (he≤-3m) | 1.4 |
| It has not underground floor | 1 |

• ac4 = Ceiling height coefficient:

| Characteristics of the Ceiling Compartmet | Ceiling Height Coeficient |
|---|---|
| Free height ≤ 2.78 m | 1.25 |
| Free height 2.78-3.34 m | 1.15 |
| Free height 3.34-4 m | 0.9 |
| Free height 4-6 m | 0.7 |

(continued)

| Characteristics of the Ceiling Compartmet | Ceiling Height Coeficient |
|---|---|
| Free height 6-10 m | |
| Free height > 10 m | |
| Without three or two opposing facades | |
| Without cover | |

• ac5 = Coefficient of accessibility in facade:

| Type of Building | Coefficient of accessibility through facade |
|---|---|
| Buildings Type M | 1.25 |
| Buildings Type N | 1.2 |
| Buildings Type Ñ | 1 |
| Buildings Type O | 0.9 |
| Buildings Type P | 0.85 |
| Buildings Type Q | 0.8 |

• ac6 = Coefficient depending on the thermal properties of the shell sector.

| Absorptivity (b) | Coefficient depending on the thermal properties of the shell sector |
|---|---|
| b<720 | 1.15 |
| 720≤b≤2500 | 1 |
| b<2500 | 0.85 |

• ac7 = Coefficient of the wall and roof ventilation:

$$ac7 = \left(\frac{6}{H}\right)\left[0{,}62 + 90x\left(\frac{(0{,}4 - a_v)^4}{(1 + b_v \; x \; a_b)}\right)\right]$$

Where:

$\alpha_v = A_v/A_f$ relationship between the surface openings in front and the floor surface of the sector, with the limits 0.025 < α <0.25                (B.4)

$$\alpha_h = A_\eta/A_f$$

relationship between the surface openings in the roof A and the built surface in sector

$$b_v = 12{,}5 \; (1 + 10 \; \alpha_v - \; \alpha_v \; 2) \geq 10 \qquad (B.5)$$

H Height of the fire sector [m]
Limited between $0.7 \leq AC7 \leq 1.4$

21. Method of assessment of the risk in case of fire in a building according to claim 2 **characterized in that** the principal parameters for the calculation of the Global Protection Level (NPL) interrelate as follows:

$$NPL = SPL \times SFR \times (0.24\ P + 0.4\ EO + 0.24\ FPI + 0.12\ FI)$$

**22.** Method of assessment of the risk in case of fire in a building according to claim 2 **characterized in that** the parameter of Self-protection Plan Level (SPL) takes the following values:

| Self-Protection Characteristics* | Self-Protection Means |
|---|---|
| Building that has the Self-Protection Plan, although it is not required by the legislation, and it is properly implemented. | 1,15 |
| Building Type A having measures remarkably more demanding than those provided by the self-protection plans, being human and material resources optimized for acting in case of emergency. | 1,2 |
| Type B building having measures remarkably more demanding than those provided by the self-protection plans, being human and material resources optimized for acting in case of emergency. | 1.15 |
| Type C having measures remarkably more demanding than those provided by the self-protection plans, being human and material resources optimized for acting in case of emergency. | 1.1 |
| Type A building with Self-Protection Plan according to current regulations. | 1 |
| Type B building with Self-Protection Plan according to current regulations. | 1 |
| Type C building with Self-Protection Plan according to current regulations. | 1 |
| Type A building without free self-protection plan or no plan in accordance with regulations in force* or poorly implemented | 0.5 |
| Type B building without free self-protection plan or no plan in accordance with regulations in force* or poorly implemented | 0.7 |
| Type C building without free self-protection plan or no plan in accordance with regulations in force* or poorly implemented | 0.8 |

Being:

Type A buildings: buildings with high panic risk (theatres, auditoriums, etc.), with people handicapped for moving (hospitals, nursing homes, kindergartens, etc.), with difficulties for evacuation (buildings of great height, flush, etc.) with high density of occupation (shopping malls, sports stadiums, etc.) and similar risks.
Type B buildings: buildings with moderate levels of said risks: public administrative buildings, universities, etc.
Type C buildings: buildings of easy evacuation, low occupation and with occupants fully familiar with the building, etc., certain residential housing buildings and administrative private buildings, etc.

**23.** Method of assessment of the risk in case of fire in a building according to claim 2 **characterized in that** the parameter basic requirement of structure fire resistance (SFR) takes the values:

| Degree of Structural Fire Resistance | Coefficient of Structural Fire Resistance |
|---|---|
| The Structural fire resistance is at least the established in the BD SI 6. 3 and 4 | 1.15 |
| The fire resistance of the structure is, at least, the equivalent to fire exposure time. | 1 |
| fire resistance unknown or not according to any bylaw. | 0.2 |

**24.** Method of assessment of the risk in case of fire in a building according to claim 2 **characterized in that** the parameter fire Propagation (P) is function of the parameters Inwards Propagation (PI) and Outwards Propagation (OP).

25. Method of assessment of the risk in case of fire in a building according to claim 24 **characterized in that** the inwards propagation (IP) is function of the following parameters: IP1 Fire sectors compartmentalization, IP2 installations crossing fire compartment elements, IP3 fire reactivity hazard coefficient, wherein IP1.1 walls and ceilings degree of fire resistance coefficient, IP1.2 doors degree of fire resistance coefficient, IP1.3 degree of compartmentalization of elevators crossing fire sectors, IP1.4 locking reliability degree of firewall doors in case of fire coefficient, and IP3.1 types of fire reactivity of construction elements, IP3.2 types of fire reactivity of textile coating elements, IP3.3 types of fire reactivity of decorative elements and furniture; and where the secondary parameter Outwards Propagation (OP) is function of the parameters OP1 shell and facade propagation limitation by fire resistant elements coefficient, and OP2 shell and facade fire reaction limitation coefficient.

26. Method of assessment of the risk in case of fire in a building according to claim 25 **characterized in that** the fire Propagation (P) parameter is calculated as:

$$P = IP \; x \; OP$$

$$P = \prod_{i=1}^{i=4} ip1i \times ip2 \times \prod_{i=1}^{i=3} ip3i \times \prod_{i=1}^{i=2} opi.$$

27. Method of assessment of the risk in case of fire in a building according to claim 25 **characterized in that** the parameters IP1.1 walls and ceilings degree of fire resistance coefficient, IP1.2 doors degree of fire resistance coefficient, IP1.3 degree of compartmentalization of elevators crossing fire sectors, IP1.4 locking reliability degree of firewall doors in case of fire coefficient, and IP3.1 types of fire reactivity of construction elements, IP3.2 types of fire reactivity of textile coating elements, IP3.3 types of fire reactivity of decorative elements and furniture; and where the secondary parameter Outwards Propagation (OP) is function of the parameters OP1 shell and facade propagation limitation by fire resistant elements coefficient, and OP2 shell and facade fire reaction limitation coefficient take the following values:

• ip1.1 = Coefficient for the degree of fire resistance of the walls and ceilings fire sector:

| Degree of fire resistance of the walls and ceilings fire compartment | Coefficient for the degree of fire resistance of the walls and ceilings fire sector |
| --- | --- |
| EI 180 | 1.4 |
| EI 120 | 1.2 |
| EI 90 | 1 |
| EI 60 | 0.9 |
| EI 30 | 0.5 |
| Without fire resistance or with unknown resistance | 0.1 |
| No sector delimited by any fire | 1 |

• ip1.2 = Coefficient for the degree of fire resistance of doors

| Grade of fire resistance of doors | Coefficient for the degree of fire resistance of doors |
| --- | --- |
| The same fire resistance walls and ceilings | 1.05 |
| Half the fire resistance of the walls and ceilings | 1 |

• ip1.3 = Coefficient for the degree of compartmentalization of lifts spanning fire sectors.

| Types of configuration | Coefficient for the degree of compartmentalization of lifts spanning fire sectors |
|---|---|
| Both delimiting elements and elevator compartment access doors have the same degree of fire resistance that intersected sectors. | 1.15 |
| Located within a protected stairway. | 1.1 |
| Delimiting Elements with the same degree that intersected sectors having access to the compartment through a door EI 30-C5 or located in the isolation lobby of a specially protected stairway. | 1 |
| Delimited elements with the same degree that intersected sectors with access through lift gate E 30. | 0.9 |
| There are no elevators or no elevators crossing fire compartments | 1 |

• ip 1.4 = Coefficient under warranty closing fire doors in case of fire:

| Door Characteristics | Coefficient under warranty closing fire doors in case of fire |
|---|---|
| All firebreak doors equipped with:<br><br>• Device controlling doors locking: C 5 (UNE EN 1154: 2003).<br><br>• Double doors have the former + door coordination devices (UNE EN 1158:2003)<br><br>• Doors designated for open position will have an electromagnetic retention device (UNE EN 1155:2003) | 1 |
| Do not meet criteria for granting door closure. | 0.7 |

• IP2 installations intersect fire compartmentalization elements:

| Characteristics of the facilities | Coefficient by Facilities Pass through fire compartmentalization elements |
|---|---|
| Compartmentalization is maintained despite a crossing installation (cables, pipes, ducts, ventilation ducts, etc.) Even installations having a section not exceeding 50 $cm^2$. | 1.2 |
| Compartmentalization is maintained despite a crossing installation (cables, pipes, ducts, ventilation ducts, etc.) Excluding installations having a section not exceeding 50 $cm^2$. | 0.8 |
| Compartmentalization is not maintained through crossing installations | 0.5 |

• ip = 3.1 Type of fire reaction of construction elements

| Characteristics of the construction elements | Coefficient by the Type of reaction to fire performance of construction elements |
|---|---|
| Roof and walls: A2-s1, d0. Floors: $A2_{FL}$-s1 | 1.3 |
| The floors fulfill the regulations. Walls and roofs: A2-s1, d0 | 1.2 |
| Fulfill table 4.1 types of reaction to fire of construction elements. | 1 |
| The type of reaction to fire of construction elements do not fulfill Table 4.1 or if it is Housing Residential use. | 0.6 |

• ip 3.2 = Type of reaction to fire of coating textile elements

| Characteristics of coating textile elements | Types of reaction to fire performance of textile items covered |
|---|---|
| will be M2 according to UNE 23727:1990 "Fire reaction tests for materials used in construction. Classification of materials used in construction". | 1 |
| will not be M2 according to UNE 23727:1990 "Fire reaction tests for materials used in construction. Classification of materials used in construction". | 0.6 |
| There are no textile coating elements | 1 |

• ip 3.3 = Type of reaction to fire of the decorative elements and furniture

| Characteristics of the decorative elements and furniture | Type of reaction to fire of the decorative elements and furniture |
|---|---|
| According to the Table: Type of reaction to fire of the decorative elements and furniture | 1 |
| Type of reaction to fire of the decorative elements and furniture is worse than expected in the Table: Type of reaction to fire of decorative elements and furniture | 0.7 |
| Without the presence of decorative elements or furniture (chairs, fixed seating and hanging textile elements). | 1 |

OP = Basic requirement outdoor propagation
• op1 = Coefficient for limiting extension through facade and shell by fire resistant elements:

| Characteristics of the elements that limit extension through facade and shell by fire resistant elements | Coefficient of limiting the spread of facade and covered by fire resistant elements |
|---|---|
| Vertical outdoor propagation is limited according to regulations and always through a strip of at least 1.5 m. Horizontal outdoor propagation is limited according to regulations and always through a strip of at least 1m. outdoor propagation through the shell is limited according to regulations. | 1.1 |
| Vertical and horizontal outdoor fire propagation and shell propagation are limited according to regulations | 1 |
| Vertical and horizontal outdoor fire propagation and shell propagation is not limited according to regulations | 0.8 |

(continued)

| Characteristics of the elements that limit extension through facade and shell by fire resistant elements | Coefficient of limiting the spread of facade and covered by fire resistant elements |
|---|---|
| In EGAS, Vertical and horizontal outdoor fire propagation and shell propagation is not limited according to regulations. | 0.6 |
| Fire compartment not delimited by another compartment through facade or shell. | 1 |

• op2 = Coefficient for limiting the reaction to fire of the facade and shell.

| Characteristic of the elements in facade and cover | Coefficient by limiting the reaction to fire of the facade and cover |
|---|---|
| The extent of reaction to fire of facade materials or shell (B-s3, d2 and BROOF (t1) respectively) is extended to the entire facade and shell. | 1.05 |
| Facades B-s3, d2 to a height of 3.5 m as a minimum, and deck areas to less than 5 m away from the vertical projection of any facade area BROOF (t1). | 1 |
| Type of reaction to fire of materials is not limited | 0.75 |
| Fire compartment with no bounds with facade or shell. | 1 |

28. Method of assessment of the risk in case of fire in a building according to claim 2 **characterised in that** the principal parameter basic requirement for Occupants Evacuation (OE) is function of the parameters OE1 number of exits, OE2 Length of the evacuation route, OE3 dimensions of evacuation elements, OE4 protection of evacuation routes, wherein, OE4.1 vertical, horizontal or mixed evacuation, OE 4.2 horizontal exits, OE4.3 vertical exits, OE4.4 stairs continuity, OE4.5 protected evacuation means ventilation, OE5 doors located on evacuation routes, wherein, OE5.1 doors opening direction, OE5.2 door opening devices, OE5.3 door type, OE5.4 automatic door type, OE6 signage means of evacuation, OE7 fire smoke control ASHES (air entrance and smoke and heat extraction systems), OE8 evacuation of handicapped people in case of fire.

29. Method of assessment of the risk in case of fire in a building according to claim 28 **characterized in that** the parameter basic requirement for Occupants Evacuation (OE) is calculated as:

$$OE = OE1 \; x \; OE2 \; x \; OE3 \; x \prod_{i=1}^{i=5} oe4i \; x \prod_{i=1}^{i=4} oe5i \; x \; OE6 \; x \; OE7.$$

30. Method of assessment of the risk in case of fire in a building according to claim 28 **characterized in that** parameters OE1 number of exits, OE2 Length of the evacuation route, OE3 dimensions of evacuation elements, OE4 protection of evacuation routes, wherein, OE4.1 vertical, horizontal or mixed evacuation, OE 4.2 horizontal exits, OE4.3 vertical exits, OE4.4 stairs continuity, OE4.5 protected evacuation means ventilation, OE5 doors located on evacuation routes, wherein OE5.1 doors opening direction, OE5.2 door opening devices, OE5.3 door type, OE5.4 automatic door type, OE6 signage means of evacuation, OE7 fire smoke control ASHES (air entrance and smoke and heat extraction systems), OE8 evacuation of handicapped people in case of fire, take the following values:

OE1 number of exits

| Characteristics | Exit Number and Distribution |
|---|---|
| Compartments or floors which, not requiring 2 exits according to Table 3.1 of DB SI 3, have two or more exits per floor. | 1.7 |

(continued)

| Characteristics | Exit Number and Distribution |
|---|---|
| Compartments or floors requiring and having more that 2 exists configuring a Q-type geometrical arrangement. | 1.7 |
| Compartments or floors requiring and having more than 2 exists configuring a P-type geometrical arrangement. | 1.6 |
| Compartments or floors requiring and having more than 2 exists configuring a O-type geometrical arrangement. | 1.5 |
| Compartments or floors that can have and have one unique exists configuring a Ñ-type geometrical arrangement. | 1 |
| Compartments or floors that can have and have one unique exists configuring a N-type geometrical arrangement. | 0.9 |
| Compartments or floors that can have and have one unique exists configuring a M-type geometrical arrangement. | 0.8 |
| Compartments or floors which, according to Table 3.1 of DB SI 3, require more than one exit and have one unique exit. | 0.4 |

OE2 Length of the evacuation route

| Characteristics | Length of the evacuation route |
|---|---|
| Compartments having one unique floor exit: evacuation route length to closest exit ≤ 15 m | 1,6 |
| Compartments having one unique floor exit: evacuation route length to closest exit ≤ 25 m | 1 |
| Compartments having one unique floor exit: evacuation route length to closest exit ≤ 31,25 m | 0.8 |
| Compartments having one unique floor exit: evacuation route length to closest exit > 31,25 m | 0.3 |
| Compartments having more than one floor exit: evacuation route length to closest exit ≤ 25 m | 1.7 |
| Compartments having more than one floor exit: evacuation route length to closest exit ≤ 35 m | 1.4 |
| Compartments having more than one floor exit: evacuation route length to closest exit ≤ 50 m | 1 |
| Compartments having more than one floor exit: evacuation route length to closest exit ≤ 65 m | 0.8 |
| Compartments having more than one floor exit: evacuation route length to closest exit >65 m | 0.4 |

OE3 dimensions of evacuation elements

| Characteristics of the dimensions | dimensions of evacuation elements |
|---|---|
| Over three times the dimensions prescribed by the TBC | 1.7 |
| Two to three times the dimensions prescribed by the TBC | 1.5 |
| 50%-100% over the dimensions prescribed by the TBC | 1.3 |
| Exactly the dimensions prescribed by the TBC | 1 |

(continued)

| Characteristics of the dimensions | dimensions of evacuation elements |
|---|---|
| Up to 25% under the dimensions prescribed by the TBC | 0.5 |
| Below 75% under the dimensions prescribed by the TBC | 0.2 |

OE4.1 vertical, horizontal or mixed evacuation

| Characteristics | vertical, horizontal or mixed evacuation |
|---|---|
| Evacuation up to safe exterior through horizontal routes | 1 |
| Evacuation up to safe exterior through horizontal or vertical routes (Building exits, stairs, etc.) | 0.4 |
| Evacuation through vertical routes | 1 |

OE 4.2 horizontal exits

| Characteristics | Horizontal exits |
|---|---|
| Building exits | 3 |
| Floor exits to a contiguous compartment or through protected corridor to safe exterior. | 0.4 |

OE4.3 vertical exits

| Characteristics | Vertical exits |
|---|---|
| Floor exit to a contiguous compartment where a protected stairway provide the evacuation route. | 2,3 |
| Floor exit to a contiguous compartment where open stairs provide the evacuation route. | 1.1 |
| Specially protected stairway | 2.2 |
| Protected stairway and corridors | 2 |
| Stairway compartmentalized according to the fire resistance of crossing sectors | 1.4 |
| Open stairways (up to third floor over ground floor) | 0.8 |
| Open stairways | 0.6 |

OE4.4 stairs continuity

| Characteristics | stairs continuity |
|---|---|
| Specially protected, compartmentalized stairways lead to safe exterior directly or to a minimal risk compartment. | 1.2 |
| Open stairways | 1 |
| Stairways without continuity in protection means | 0.8 |

OE4.5 protected evacuation means ventilation

| Characteristics | stairs continuity |
|---|---|
| Specially protected and protected stairways ventilation by overpressure | 1.25 |
| Passive ventilation (windows, conduits, etc) | 1.05 |
| There are no protected stairways or corridors requiring ventilation | 1 |

(continued)

| Characteristics | stairs continuity |
|---|---|
| protected stairways or corridors without ventilation | 0.85 |

OE5.1 doors opening direction

| Door Characteristics | doors opening direction |
|---|---|
| Door will open towards evacuation direction | 1.05 |
| Doors designed for over 100 people or for over 50 occupants in the compatment open towards evacuation direction | 1 |
| Doors designed for over 100 people or for over 50 occupants in the compatment do not open towards evacuation direction | 0.9 |

OE5.2 door opening devices

| Door Characteristics | door opening devices |
|---|---|
| Door opening device consisting on a horizontal bar for pushing open according to regulation UNE EN 1125:2003 VC1 | 1.05 |
| People not familiar with the door and opening towards evacuation direction. Door opening device consisting on a horizontal bar for pushing open according to regulation UNE EN 1125: 2003 VC1 | 1 |
| People familiar with the door: handle or push opening device according to regulation UNE EN 179:2003 VC1 | 1 |
| Opening devices not subjected to regulations. | 0.9 |

OE5.3 door type

| Door Characteristics | Door type |
|---|---|
| Swinging doors with vertical axis of rotation | 1.05 |
| Doors designed for exiting the floor or building and those designed to allow exiting over 50 are swinging doors with vertical axis of rotation | 1 |
| Doors designed for exiting the floor or building and those designed to allow exiting over 50 are not swinging doors with vertical axis of rotation. | 0.9 |

OE5.4 automatic door type

| Door Characteristics | Door located on a evacuation route |
|---|---|
| Revolving or automatically opened doors with granted performing on emergencies according to normatives. | 1 |
| Revolving or automatically opened doors without granted performing on emergencies according to normatives. | 0.8 |
| No revolving or automatically opened doors | 1 |

OE6 sinage of evacuation means,

| Sinage Characteristics | Sinage of evacuation means |
|---|---|
| Evacuation means ae systematized according to DB SI 3.7. criteria. Exiting serials comply with normative UNE 23034:1988. Signals are visible even in lighting systems fail. Sinage system complies with bylaws for handicapped people. | 1 |
| No sinage system or sinage system not according to regulation. | 0.6 |

OE7 fire smoke control ASHES (air entrance and smoke and heat extraction systems)

| Types of ASHES in the compartment | fire smoke control |
|---|---|
| One ASHES according to UNE 23585:2004 y EN 12101- 26:2005 | 2 |
| Ventilation system in parking lots according to the provisions of DB SI 3.8.2 sections a), b) y c). | 1.5 |
| Without ASHES | 1 |

OE8 evacuation of handicapped people in case of fire

| evacuation of handicapped people in case of fire | Coefficient for handicapped people evacuation |
|---|---|
| As required by the DB SI, floors present a way to an alternative fire compartment by exiting the floor or a refuge area suitable for the allowed number of places. Will count with some accessible itinerary towards them among all regulated evacuation origins. Building exiting floors comprise any regulated itinerary accessible from all origins of evacuation located in an accessible area up to the exit of the building. | 1.2 |
| regulatory conditions are not met even when required by the DB SI | 0.7 |
| Not required by the DBSI, the building allows for evacuation of handicapped people according to the security conditions described above. | 1.3 |
| Not required by the DBSI, the building does not allow for evacuation of handicapped people | 0.9 |
| Accessibility conditions in case of fire are not evaluated. | 1 |

31. Method of assessment of the risk in case of fire in a building according to claim 2 **characterised in that** the basic requirement parameter Fire Protection System Installation (FPSI) is function of the parameters FPSI1 detection and fire alarm system, FPSI2 manual extinction installation, FPSI3 automatic extinction installations, FPSI4 complementary fire security systems, wherein, fpsi1.1 availability of detection and fire alarm, fpsi1.2 detection type, fpsi1.3 detector identifier, fpsi1.4 fire alarm system, fpsi1.5 supervised detection center, fpsi1.6 detection center connected to firefighter headquarters; fpsi2.1 manual extinction installation, fpsi2.2 dry column, fpsi2.3 Hydrants, fpsi2.4 equipped hydrants; fpsi3.1 protection area, fpsi3.2 object of design; fpsi4.1 fire protection sinage system, fpsi4.2 emergency elevators, fpsi4.3 emergency lighting.

32. Method of assessment of the risk in case of fire in a building according to claim 31 **characterised in that** the basic requirement parameter Fire Protection System Installation (FPSI) is calculated as:

$$FPSI = \prod_{i=1}^{i=6} fpsi1i \ x \ \prod_{i=1}^{i=4} fpsi2i \ x \prod_{i=1}^{i=2} fpsi3i \ x \prod_{i=1}^{i=3} fpsi4i$$

33. Method of assessment of the risk in case of fire in a building according to claim 31 **characterized in that** parameters FPSI1 detection and fire alarm system, FPSI2 manual extinction installation, FPSI3 automatic extinction installations, FPSI4 complementary fire security systems, wherein, fpsi1.1 availability of detection and fire alarm, fpsi1.2 detection type, fpsi1.3 detector identifier, fpsi1.4 fire alarm system, fpsi1.5 supervised detection center, fpsi1.6 detection center connected to firefighter headquarters; fpsi2.1 manual extinction installation, fpsi2.2 dry column, fpsi2.3 Hydrants, fpsi2.4 equipped hydrants; fpsi3.1 protection area, fpsi3.2 aim of design; fpsi4.1 fire protection sinage system, fpsi4.2 emergency elevators, fpsi4.3 emergency lighting, take the following values:

fpsi1.1 availability of detection and fire alarm

| Characteristics | availability of detection and fire alarm |
|---|---|
| detection and fire alarm availability | 1 |
| detection and fire alarm not available | 0.7 |

fpsi1.2 detection type

| Provision of detection and fire alarm system in the compartment | Detection type |
|---|---|
| Early detection by aspiration systems | 1.6 |
| detection by fire or flames detector | 1.5 |
| detection by thermic detector/sprinkler | 1.4 |
| Manual fire alarm system | 1 |

fpsi1.3 detector identifier

| Characteristics | detector identifier |
|---|---|
| With detector identification (analogical) | 1.1 |
| Without detector identification | 1 |

fpsi1.4 fire alarm system

| Provision of detection and fire alarm system in the compartment | fire alarm system |
|---|---|
| Loudspeaker communication of alarm | 1.1 |
| Sirens communication of alarm | 1 |

fpsi1.5 supervised detection center

| Provision of detection and fire alarm system in the compartment | supervised detection center |
|---|---|
| Permanently supervised center | 1.1 |
| Not permanently supervised center | 0.8 |

fpsi1.6 detection center connected to firefighter headquarters

| Provision of detection and fire alarm system in the compartment | Detection and fire alarm system |
|---|---|
| detection center connected to firefighter headquarters | 1.2 |
| detection center not connected to firefighter headquarters | 1 |

fpsi2.1 manual extinction installation

| Provision of manual extinction installation | manual extinction installation |
|---|---|
| portable fire extinguisher available | 1 |
| portable fire extinguisher not available | 0.7 |

fpsi2.2 dry column

| Provision of manual extinction installation | Dry column |
|---|---|
| Dry column (buildings of h>24 m or more than 3 floors over ground floor) | 1.2 |
| Dry column (buildings of h<24 m) | 1.1 |
| No dry column | 1 |

fpsi2.3 Hydrants

| Provision of manual extinction installation | Hydrants |
|---|---|
| With hydrant | 1.1 |
| Without hydrant | 0.8 |

fpsi2.4 equipped hydrants;

| Provision of manual extinction installation | BIEs |
|---|---|
| BIEs 45mm | 1.4 |
| BIEs 25 mm | 1.35 |
| No BIEs | 0.9 |

fpsi3.1 protection area

| Provision of manual extinction installation | Protected area |
|---|---|
| The entire compartment is protected by an automatic extinction system | 1 |
| BISpecial risk compartments are protected by an automatic extinction system | 0.4 |
| No automatic extinction system | 1 |

fpsi3.2 aim of design

| Provision of manual extinction installation | Aim of design |
|---|---|
| Extinguishing fire | 4.5 |
| Suppressing fire | 4 |
| Controlling fire | 3.5 |

fpsi4.1 fire protection signage system

| Provision | signage system for fire protection installation |
|---|---|
| signage system for fire protection installation | 1 |
| No signage system for fire protection installation | 0.9 |

fpsi4.2 emergency elevators

| Provisions | ergency elevators |
|---|---|
| Not EGAS or hospital use (h>15 m) and count with emergency elevators | 1.3 |
| EGAS or hospital use (h>15 m) and count with emergency elevators | 1.2 |
| Not EGAS or hospital use (h>15 m) and do not count with emergency elevators | 1 |
| EGAs or Hospital without emergency elevators | 0.7 |

fpsi4.3 emergency lighting

| Provision | emergency lighting |
|---|---|
| emergency liqhting available | 1 |
| No emergency lighting available | 0.3 |

34. Method of assessment of the risk in case of fire in a building according to claim 2 **characterised in that** the principal parameter basic requirement for Firefighter Intervention (FI) is function of the parameters fi1 firefighter accessibility and surroundings , fi2 distance to the firefighter headquarters, fi3 private firefighters.

35. Method of assessment of the risk in case of fire in a building according to claim 34 **characterized in that** the parameter requirement basic intervention of firefighters (IB) is calculated as: $FI = \prod_{i=1}^{i=3} ibi$

36. Method of assessment of the risk in case of fire in a building according to claim 34 **characterized in that** the parameters: fi1 firefighter accessibility and surroundings , fi2 distance to the firefighter headquarters, fi3 private firefighters, take the following values:

fi1 firefighter accessibility and surroundings

| Characteristics | firefighter accessibility and surroundings |
|---|---|
| Buildings having falling evacuation heights ≤ 9 m and with one or more accessible facades | 1.1 |
| Fulfills DB SI 5* accessibility conditions, providing 4 accesible facades | 1.4 |
| Fulfills DB SI 5* accessibility conditions, providing 3 accesible facades | 1.3 |
| Fulfills DB SI 5* accessibility conditions, providing 2 accesible facades | 1.2 |
| Fulfills DB SI 5* accessibility conditions, providing 1 accesible facades | 1 |
| Buildings having falling evacuation heights ≤ 9 m and no accessible facades | 0.9 |
| Buldings not fullfilling DB SI 5* accessibility conditions. | 0.2 |

fi2 distance to the firefighter headquarters

| Characteristics | distance to the firefighter headquarters |
|---|---|
| distance to a public firefighter headquarter ≤ 5 Km | 1.4 |
| distance to a public firefighter headquarter 5-10 Km | 1.1 |
| distance to a public firefighter headquarter 10-25 Km | 0.8 |
| distance to a public firefighter headquarter 25-50 Km | 0.5 |
| distance to a public firefighter headquarter > 50 Km | 0.4 |

fi3 private firefighters

| Characteristics | private firefighters |
|---|---|
| Permanent private firefighter team at the building, able of effectively and immediately intervening in case of fire. | 7 |
| No private firefighters | 1 |

**Amended claims under Art. 19.1 PCT**

**1.** A method for activation of security devices for increasing a occupant's security in the event of fire in a building, comprising the steps of:

- Real-time data harvesting by means of sensors or devices installed in said building, said devices relating to at least one among: Number of Occupants (NO), Characteristics of the Occupants (CO), Building features influencing the onset, development and propagation of fire (T), Architectural Characteristics (AC), Building's Self-Protection Plan (SPP), Structural Fire Resistance (SFR), Features for preventing both, inwards and onwards fire propagation (P), Emergency Evacuation Means (EM), Fire Protection System Installation (FPSI) and Firefighter Accessibility (FFA);
- Real-time dispatch of harvested data to a data-processing system supplied with additional, non real-time, building data in order to determine the building's Global Fire Risk in case of a potential fire event;
- Activation of security devices in the building if the building's Global Fire Risk is beyond the security level, wherein said activation modifies at least one among: Number of Occupants (NO), Characteristics of the Occupant (CO), Building features influencing the onset, development and propagation of fire (T), Architectural Characteristics (AC), Building's Self-Protection Plan (SPP), Structural Fire Resistance (SFR), Features for preventing both, inwards and onwards fire propagation (P), Emergency Evacuation Means (EM), Fire Protection System Installation (FPSI) and Firefighter Accessibility (FFA).

**2.** The method of claim 1 where the sensors or devices for harvesting real-time data are at least one among: people entry/exit sensors (lathe-like or the equivalent), device for entering a code of a rating system for a variety of activities that may be performed and/or maintenance tasks that can start a fire, sensors for detecting large carts or luggage located in the access to the building, sensors for measuring the density of the different compartments of the building (thermal type, artificial vision or the equivalent), sensors for evaluating: water pressure, water level in the tank, the operating state of the pumping unit, the operating state of the emergency lighting, sprinklers, emergency elevators, firewall doors and gates and emergency power supply.

**3.** The method of claim 1 where the security devices activated in the building are at least one among: actuators supporting the blockage of lathes in order to prevent access to the building, locking oxygen valves and acclimatization system and emission of messages by loudspeakers loudspeaker systems.

**4.** The method for activation of security devices of claim 1 **characterized in that** the Global Risk Level in a building is determined by the ratio between the Potential Risk and the Global Protection Level, wherein the Potential Risk Level is function of the principal parameters: and number of people exposed (NPE), Fire Tetrahedron (T), Characteristics of the Occupants (CO), Architectural Characteristics (AC), the Global Protection Level is function of the principal parameters: Level of Building's Self-Protection Plan (SPP), Basic requirement for Structural Fire Resistance (SFR), fire propagation (P), Basic requirement for Occupants Evacuation (OE), Basic requirement for Fire Protection System Installation (FPSI) and Basic requirement for Firefighter Intervention (FI).

**5.** The method for activation of security devices of claim 4 **characterized in that** for the calculation of the Potential Risk, principal parameters interrelate according to: Potential Risk = NPS x (0.4T + 0.3 CO + 0.3 AC);

**6.** The method for activation of security devices of claim 4 **characterized in that** the principal parameter Fire Tetrahedron (T) is function of the secondary parameters combustible (TC), comburent (TCM), energy of activation (TAE) and chain-reaction Coefficient (TCR).

**EP 2 709 054 A1**

**7.** The method for activation of security devices of claim 6 **characterized in that** the Fire Tetrahedron (T) secondary parameters interrelate according to: *T = TC* x *TCM* x *TAE* x *TCR.*

**8.** The method for activation of security devices of claim 6 **characterized in that**, the secondary parameter combustible (TC) is function of the following parameters: c1 Transferable fire charge, c2 Building's fire load coefficient, c3 combustibility hazard coefficient, c4 Smoke hazard coefficient, c5 corrosion or toxicity hazard coefficient, c6 speed of fire development coefficient,

**9.** The method for activation of security devices of claim 8 **characterized in that** the parameters of the combustible (TC) interrelate according to: $TC = \prod_{i=1}^{i=6} ci$.

**10.** The method for activation of security devices of claim 4 **characterized in that**, the secondary parameter energy of activation (TEA) is function of the following parameters: ea1 activation hazard coefficient, ea2 special risk hazard coefficient, ea3 repair hazard coefficient, ea4 State of the electrical installation hazard coefficient, ea5 heating and flammable decoration hazard coefficient.

**11.** The method for activation of security devices of claim 10 **characterized in that** the parameters of energy of activation (TEA) interrelate according to: $TEA = \prod_{i=1}^{i=5} eai$ .

**12.** The method for activation of security devices of claim 4 **characterized in that**, the principal parameter Characteristics of the Occupants (CO) is function of the following parameters: co1 coefficient of vulnerability of the occupants due to physical or psychological limitations, co2 coefficient of occupants' familiarity with the building, co3 coefficient of sleeping occupants, co4 risk coefficient due to the use of large trucks, luggage, etc, co5 density coefficient, co6 panic risk coefficient and co7 orientation coefficient.

**13.** The method for activation of security devices of claim 12 **characterized in that** the parameters of Characteristics of the Occupants (CO) interrelate according to: TCO = $\prod_{i=1}^{i=7} coi$.

**14.** The method for activation of security devices of claim 4 **characterized in that**, the principal parameter Architectural Characteristics (AC) is function of ac1 compartment surface area coefficient, ac2 height over flush-line coefficient, ac3 height under flush-line coefficient, ac4 ceiling height coefficient, ac5 facade accessibility coefficient, ac6 shell thermal features coefficient, ac7 facade and shell ventilation coefficient.

**15.** The method for activation of security devices of claim 14 **characterized in that** the parameters of Architectural Characteristics (AC) interrelate according to: $TAC = \prod_{i=1}^{i=7} aci$.

**16.** The method for activation of security devices of claim 4 **characterized in that** for the calculation of Global Protection Level, principal parametres interrelate according to: GPL= SPP x SFR x (0.24P + 0.4 OE + 0,24 FPSI +0.12 FI).

**17.** The method for activation of security devices of claim 4 **characterized in that**, the principal parameter fire Propagation (P) is function of the parameters inwards propagation (IP) and outwards propagation (OP).

**18.** The method for activation of security devices of claim 17 **characterized in that**, the secondary parameter inwards propagation (IP) is function of the following parameters: IP1 Fire sectors compartmentalization, IP2 installations crossing fire compartment elements, IP3 fire reactivity hazard coefficient, wherein IP1.1 walls and ceilings degree of fire resistance coefficient, IP1.2 doors degree of fire resistance coefficient, IP1.3 degree of compartmentalization of elevators crossing fire sectors, IP1.4 locking reliability degree of firewall doors in case of fire coefficient, and IP3.1 types of fire reactivity of construction elements, IP3.2 types of fire reactivity of textile coating elements, IP3.3 types of fire reactivity of decorative elements and furniture; and where the secondary parameter Outwards Propagation (OP) is function of the parameters OP1 shell and facade propagation limitation by fire resistant elements coefficient, and OP2 shell and facade fire reaction limitation coefficient.

**19.** The method for activation of security devices of claim 18 **characterized in that** the parameters of fire Propagation (P) interrelate according to:

$$P = IP \; x \; OP$$

$$P = \prod_{i=1}^{i=4} ip1i \times ip2 \times \prod_{i=1}^{i=3} ip3i \times \prod_{i=1}^{i=2} opi.$$

**20.** The method for activation of security devices of claim 4 **characterized in that** the principal parameter Basic requirement for Occupants Evacuation (OE) is function of the parameters OE1 number of exits, OE2 Length of the evacuation route, OE3 dimensions of evacuation elements, OE4 protection of evacuation routes, wherein, OE4.1 vertical, horizontal or mixed evacuation, OE 4.2 horizontal exits, OE4.3 vertical exits, OE4.4 stairs continuity, OE4.5 protected evacuation means ventilation, OE5 doors located on evacuation routes, wherein OE5.1 doors opening direction, OE5.2 door opening devices, OE5.3 door type and OE5.4 automatic door type OE6 signing of evacuation means, OE7 fire smoke control ASHES (air entrance and smoke and heat extraction systems), OE8 Evacuation of handicapped Ocupants.

**21.** The method for activation of security devices of claim 20 **characterized in that** the parameters of Occupants Evacuation (OE) interrelate according to:

$$OE = OE1 \; x \; OE2 \; x \; OE3 \; x \prod_{i=1}^{i=5} oe4i \; x \prod_{i=1}^{i=4} oe5i \; x \; OE6 \; x \; OE7 \; x \; OE8.$$

**22.** The method for activation of security devices of claim 4 **characterized in that** the principal parameter Basic requirement for Fire Protection System Installation (FPSI) is function of the parameters FPSI1 detection and fire alarm system, FPSI2 manual extinction installation, FPSI3 automatic extinction installations, FPSI4 complementary fire security systems, wherein, fpsi1.1 availability of detection and fire alarm, fpsi1.2 detection type, fpsi1.3 detector identifier, fpsi1.4 fire alarm system, fpsi1.5 supervised detection center, fpsi1.6 detection center connected to firefighter headquarters; fpsi2.1 manual extinction installation, fpsi2.2 dry column, fpsi2.3 Hydrants, fpsi2.4 equipped hydrants; fpsi3.1 protection area, fpsi3.2 object of design; fpsi4.1 fire protection signing system, fpsi4.2 emergency elevators and fpsi4.3 emergency lighting.

**23.** The method for activation of security devices of claim 22 **characterized in that** the parameters of Fire Protection System Installation (FPSI) interrelate according to:

$$FPSI = \prod_{i=1}^{i=6} fpsi1i \; x \; \prod_{i=1}^{i=4} fpsi2i \; x \prod_{i=1}^{i=2} fpsi3i \; x \prod_{i=1}^{i=3} fpsi4i$$

**24.** The method for activation of security devices of claim 4 **Characterized in that** the principal parameter Basic requirement for Firefighter Intervention (FI) is function of the parameters fi1 firefighter accessibility and surroundings, fi2 distance to the firefighter headquarters and fi3 private firefighters.

**25.** The method for activation of security devices of claim 24 **characterized in that** the parameters of Basic Requirement for Firefighter Intervention (FI) interrelate according to:

$$FI = \prod_{i=1}^{i=3} ibi$$

# INTERNATIONAL SEARCH REPORT

| International application No. |
| --- |
| PCT/ES2011/000358 |

**A. CLASSIFICATION OF SUBJECT MATTER**

*G06Q50/08* (2012.01)

According to International Patent Classification (IPC) or to both national classification and IPC

**B. FIELDS SEARCHED**

Minimum documentation searched (classification system followed by classification symbols)

G06Q

Documentation searched other than minimum documentation to the extent that such documents are included in the fields searched

Electronic data base consulted during the international search (name of data base and, where practicable, search terms used)

EPODOC, INVENES, WPI, INSPEC, INTERNET

**C. DOCUMENTS CONSIDERED TO BE RELEVANT**

| Category* | Citation of document, with indication, where appropriate, of the relevant passages | Relevant to claim No. |
| --- | --- | --- |
| X | PEREZ-MARTIN J, DIAZ-DIAZ R, SANTOS-GARCIA R. "METODO DE EVALUACION DEL RIESGO DE INCENDIO EN EL MARCO DEL CÓDIGO TÉCNICO DE LA EDIFICACIÓN." DYNA Ingeniería e Industria. May 2010. Vol. 85-4 p.303-314 | 1-36 |

☐ Further documents are listed in the continuation of Box C.          ☐ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance. | |
| "E" earlier document but published on or after the international filing date | |
| "L" document which may throw doubts on priority claim(s) or which is cited to establish the publication date of another citation or other special reason (as specified) | "X" document of particular relevance; the claimed invention cannot be considered novel or cannot be considered to involve an inventive step when the document is taken alone |
| "O" document referring to an oral disclosure use, exhibition, or other means. | "Y" document of particular relevance; the claimed invention cannot be considered to involve an inventive step when the document is combined with one or more other documents , such combination being obvious to a person skilled in the art |
| "P" document published prior to the international filing date but later than the priority date claimed | |
| | "&" document member of the same patent family |

| Date of the actual completion of the international search | Date of mailing of the international search report |
| --- | --- |
| 12/04/2012 | **(08/05/2012)** |

| Name and mailing address of the ISA/ | Authorized officer |
| --- | --- |
| OFICINA ESPAÑOLA DE PATENTES Y MARCAS Paseo de la Castellana, 75 - 28071 Madrid (España) Facsimile No.: 91 349 53 04 | M. Alvarez Moreno<br><br>Telephone No. 91 3495495 |

Form PCT/ISA/210 (second sheet) (July 2009)

**EP 2 709 054 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2002117363 B
- GB 2376092 A
- US 20060111799 A1